Europäisches Patentamt

European Patent Office

Office européen des brevets

(11) Publication number: **0 444 669 A2**

(12) **EUROPEAN PATENT APPLICATION**

(21) Application number: **91103011.2**

(22) Date of filing: **28.02.91**

(51) Int. Cl.⁵: **G06F 15/20, G06F 15/72**

(30) Priority: **02.03.90 JP 49279/90**

(43) Date of publication of application:
**04.09.91 Bulletin 91/36**

(84) Designated Contracting States:
**DE FR GB IT NL**

(71) Applicant: **HITACHI, LTD.**
**6, Kanda Surugadai 4-chome**
**Chiyoda-ku, Tokyo 101(JP)**

(72) Inventor: **Orita, Miyahiko**

**deceased(JP)**
Inventor: **Tanifuji, Shinya**
**20-1, Daiharacho-2-chome**
**Hitachi-shi(JP)**
Inventor: **Matsumoto, Hidekazu**

**22-5, Daiharacho-2-chome**
**Hitachi-shi(JP)**
Inventor: **Yamaashi, Satoko**
**17-1-403, Moriyamacho-3-chome**
**Hitachi-shi(JP)**
Inventor: **Kawakami, Junzo**
**449-61, Miwa-1-chome**
**Mito-shi(JP)**
Inventor: **Takei.Kazuo**
**35-7,Minamidai, Tokaimura**
**Naka-gun, Ibaraki-ken(JP)**

(74) Representative: **Patentanwälte Beetz sen. -**
**Beetz jun. Timpe - Siegfried -**
**Schmitt-Fumian- Mayr**
**Steinsdorfstrasse 10**
**W-8000 München 22(DE)**

(54) **System for managing cooperative preparation of a document by a plurality of partakers.**

㉗ In the system a specification is inputted for specifying items constituting a document and a partaker who inputs contents corresponding to the items are specified; contents pertinent to the items are inputted and referred; and priority is given, on the basis of the document specification, to the inputting of an item and a content by the specified partaker. Further, a paper form may be designated for specifying a rule of layout of contents on a page corresponding to items in the document specifications and design patterns decorating the page; a paper sheet of the form specified in the above may be supplied at the start of drafting the contents; and priority may be given to a change of the paper format by a given partaker.

FIG.2

## BACKGROUND OF THE IVNENTION

The present invention relates to a system for managing cooperative preparation of a document by a plurality of partakers for facilitating cooperative preparation of a document by use of a computer-aided document preparation system.

Generally, technical documents such as specifications, manuals, etc., are cooperatively prepared by a plurality of partakers. As dcoument processing systems by means of prior arts there are such as referred to in the following literatures.

[Literature 1]: by Kondo, Seimon, Fukuoka, Nose and Murata; "Work Group Computer System based on 2050 Workstation", Report of The Information Processing Society of Japan, Operating System 41-1, pp. 1-7, (1988).

[Literature 2]: by Honma, Ohkubo and Baba, "MELCOM80 Series Integrated OA Basic Software", Mitsubishi-Denki-Giho, Vol. 60, No. 7, pp. 14-18, (1986).

[Literature 3]: by Fukui, Doi, Takebayashi, Yamaguchi, et al. "Automatic Layout System based on the Logical Structure of a Document", Report of The Information Processing Society of Japan, Document Processing and Human Interface, 20-3, pp. 1-10 (1988).

[Literature 4]: by Fukushima, Ohtake, Ohyama, Shuto, "Japanese Sentence Processing Support System", COMET, Technical Report of Reliability Soceity of Japan, Vol. 86, No. 143, OS86-21, pp. 15-21 (1986).

According to the document processing systems by the prior arts, for instance, such as those in the literature 1 or 2, a cooperative document preparation (by work sharing) will go through the following steps.

① A new shared directory common to all partakers is set up. Authorized partakers are allowed to freely access documents stored in this shared directory.

② The specifications of a document to be cooperatively prepared by work sharing are defined. Namely, description items for a document and their partaking authors assigned thereto are determined. This will be called a document specification.

If possible, a format to comply with in documenting each item should be determined and entered in the document specification. A format, however, may not be determined formally in this stage yet.

③ The document specification is stored in the above shared directory referred to in ① , or the document specification may be prepared in the shared directory.

④ All partakers involved in this task are informed of the existence of the above shared directory and document specification, and are requested to execute their assingments. An electronic mailing function may be used for the notification.

⑤ Each partaker learns his assingment by viewing through the document specification existing in the shared directory, and then proceeds to document an item assigned to the partaker.

⑥ An individual document prepared by each partaker is stored in the shared directory so as to allow other partakers to view the same, with a name tag attached to help trace the corresponding item.

⑦ Each partaker engaged in the preparation of a document in cooperation with others is always concerned about the relationship with other partakers. Therefore, sometimes, a partaker may come up with questions, comments or proposals the partaker would like to make with respect to the partaker's assignment. In such occasions the partaker may give an instruction to other partakers concerned, for example, through an electronic mail service. On the other hand, other partakes instructed may respond to the instruction through the mail function.

⑧ Upon completion of a document by sharing between partakers, contradictions such as disagreement in numbering in chapters and clauses, or inconsistency in terminology are reviewed and corrected. If a paper form had not been defined before starting the document drafting, the paper form will be defined hereat for formally printing out the document.

The above steps describe how a cooperative document preparation has been conducted by use of prior art document processing systems.

Prior art document processing systems may, however, suffer from inconveniences described below.

(I) Since large portions depend on goodwills or presumptions of each partaker in the document processing operations in the shared directory, confusions are likely to arise.

For example, the shared directory can store various documents that are irrelevant to the specified document format. If these occur frequently, however, it would take a lot of time to retrieve an object document really wanted.

In short, a document specification, however carefully it might be prepared, is nothing more than a promise, having no authority to control nor supervise document processing by individual partakers.

(II) It is hard to access the contents of the instructions and responses exchanged between partakers.

Since the prior art mail function is used for general purposes, each addressee receives information with various contents. Therefore, each addressee is required to arrange in order a set of instructions given to his/her assigned items by oneself. This is cumbersome, and still more is likely to cause omission.

In addition, for example, when one wishes to give some instructions to a relevant portion, and if one finds there are already similar instructions issued from other partakers, then it will become unnecessary for one to repeat the same instruction. Thus, it becomes necessary for one to look into the records of related instructions and responses already exchanged, before issuing an instruction. Awareness of the records of such exchanges will be necessary and helpful to keep abreast of the changes being made in the related parts.

In the prior art mail functions, however, it is prohibited for a third person to access the contents of an exchanged mail. Therefore, there have been no other means than to ask a person directly in charge or have him copy the records, if available, which are also very cumbersome and likely to cause omission.

There are some mail functions whereby the contents of mails exchanged therein are laid open. However, because even an outsider is capable of accessing the mail, they cannot be employed in such applications where confidential documents are handled and exchanged.

(III) Correction of misnumbering in pages, chapters, clauses, drawings and tables, or of inconsistency in terms and phrasing are all made manually in a time-consuming manner. There are prior art technologies that support the above functions in personal document processing operations, but never in the field of a cooperative document preparation, thus the same are limited to the processing within a single document.

## SUMMARY OF THE INVENTION

An object of the present invention is to provide a cooperative document preparation management system for facilitating a document preparation by work sharing.

Some embodiments of the present invention may have constitutions described below.

i) A document processing system is provided with: input means for inputting a document specification for specifying items constituting a document and a partaker who inputs contents corresponding to the items are specified; means for inputting contents pertinent to the items and referring to the same; and means for giving, on the basis of the document specification, priority to the inputting of an item and a content by the specified partaker.

ii) A document processing system may have, in addition to the means recited in i) means for designating a paper form for designating a rule of layout of contents on a page corresponding to items in the document specifications and also design patterns decorating the page; means for supplying a paper sheet of the form specified in the above at the start of drafting the contents; and a means for giving priority to a change of the paper format by a given partaker.

iii) A document processing system may have: means for giving an instruction corresponding to a document or to its portion; means for responding in relation to each instruction; and means for storing the content of the instruction and response according to each document or its portions.

iv) A document processing system may have, in addition to the means as recited in the above iii), means for inputting a partaker group; means for relating and allocating a document to the partaker group member; and means for laying open the instructions and responses associated with the document among the partaker group members involved.

v) A document processing system may have: means for designating a sequential order between documents; means for designating a document format for numbering in paging, chapters, clauses, drawings and tables; means for extracting a logical structure in the document; and means for correcting disagreements in the numbering of pages, chapters, clauses, drawings and tables, and also its format, on the basis of the predetermined format, sequential order between the documents, and logical structures of each document.

vi) A document processing system may have: means for inputting a set of documents; means for specifying, for the set of documents, a phrasing format, thesaurus, representative words from a group of synonyms, and a paper form for specifying the rules of layout of the contents of a document and a decorative pattern on the page; means for converting phrasing formats in separate documents in the set of documents to a predetermined phrasing format; means for converting varied terms used in each document to a predetermined representative word; and means for correcting and rearranging the rules of layout for the contents of each document or page decoration patterns on a predetermined paper form.

vii) A document processing system may have, in addition to the means as recited in the above i), means for displaying names of partakers with reference to a document item; and means for displaying a work progress status for each item.

Owing to the above-mentioned constitution of embodiments, one or more of the following functional effect and advantages may be obtained.

a) Generation of documents irrelevant to a specified document can be prevented so as to facilitate easy retrieval of pertinent documents, by providing, within a document processing system: means for inputting a document specification for designating document constituting items, and partakers who input the contents corresponding to these items; means for inputting and referring to the contents related to the above items; and means for giving priority to the inputting of items and contents by a specified partaker, on the basis of the above document specification.

b) Paper forms to be used in the system can be standardized by providing, within a document processing system: means for specifying a paper form for designating a layout rule on the page of the contents corresponding to the items as specified in a document specification and a page decorative pattern; means for supplying paper sheets as specified in the above at the start of drafting the contents; and means for giving priority to a change in the paper form by a specified partaker.

c) The contents or statements of instructions and responses can be readily referred to by providing, within a document processing system: means for giving instructions corresponding to a document or to its portions; means for responding relating to the instructions; and means for recording the statements of the instructions or response relating to the documents or their portions.

d) Duplication of instructions may be prevented in the partaker group because any partakers who are not directly related or in charge are allowed to refer to the records of instructions and responses. Further, access from the outside can be prevented so as to ensure protection of confidential information. All these may be attained by providing, within a document processing system: means for inputting partaker group members; means for relating and assigning the document to the partaker group members; and means for laying open the instructions and responses relating to the document to the partaker group members assinged therein.

e) A checkup of a document cooperatively prepared by a job sharing can be readily performed by providing, within a document processing system: means for specifying a sequential order between a set of documents; means for specifying a numbering format for paging, chapters, clauses, drawings and tables; means for extracting logical structures in a document; and means for correcting disagreements in numbering in pages, chapters, clauses, drawings and tables, or for correcting their formats, on the basis of the predetermined format, sequential order in the pages and logical structures in each document.

f) Contradictions and disagreements in the contents and formats occurring among a set of documents when they are prepared by job sharing among partakers are capable of being eliminated by providing, within a document processing system: means for inputting a set of documents; means for specifying a format for paper sheets for defining, corresponding to the set of documents, a phrasing format, thesaurus, a representative word for a set of synoyms, a rule of layout on the page and a page decorative pattern; means for converting phrasing formats used in each document in the set of documents to a predetermined format; means for converting terms used in each document to a predetermined representative word; and means for correcting the rules of layout for the contents of each document on the page and a page decorative patterns, and for rearranging the same on a predetermined paper form.

g) Partaker management will become easier by providing, within a document processing system, a display means for displaying names of partakers corresponding to each document item, and a job progress status for each item and partaker.

BRIEF DESCRIPTION OF THE DRAWINGS

Fig. 1 shows s system configuration of an embodiment of the present invention.

Fig. 2 shows operational shift by system users in the embodiment.

Fig. 3 illustrates a personal desk screen according to the embodiment.

Fig. 4 shows a set-up operation for a new shared desk in the embodiment.

Fig. 5 shows a shared desk screen in the embodiment.

Figs. 6 and 7 explain document item input and assignment set-up in the embodiment.

Figs. 8 to 12 show display screens during document editing in the embodiment.

Fig. 13 shows a process of the last finish referred to in Fig. 2.

Figs. 14 to 17 explain each step in the last finish referred to in Fig. 13.

Figs. 18 to 26 explain a relationship between the structure of data referred to in Fig. 1 and system operations.

Figs. 27 to 29 explain other embodiments of the present invention.

## DESCRIPTION OF THE PREFERRED EMBODIMENTS

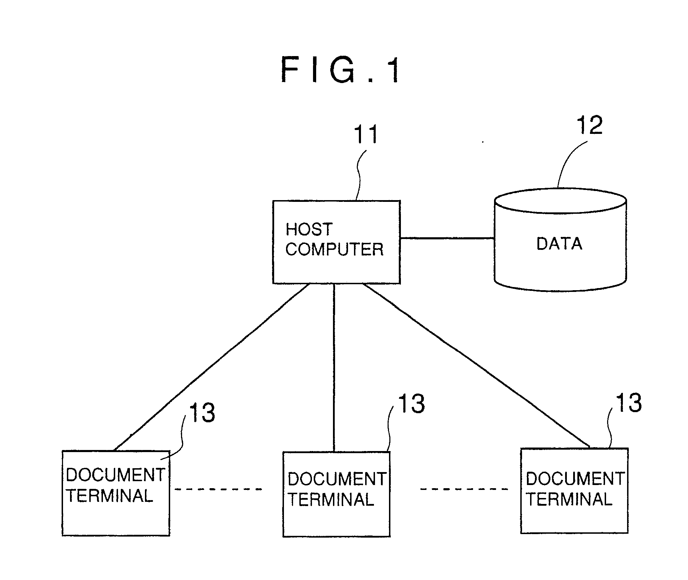

First of all, computer environment will be explained with reference to Fig. 1. The computer environment wherein a system for managing cooperative document preparation will run comprises a host computer 11 which handles an overall control in the system, a data file 12 which stores documents and management information and document terminals 13 on which each partaker carries out document processing.

In the following, operations by each partaker, and an outline of functions of the system will be described. Thereafter, the configuration of the data file 12, and data operations in the host computer 12 and document terminals 13 will be described in relation to the data file configuration.

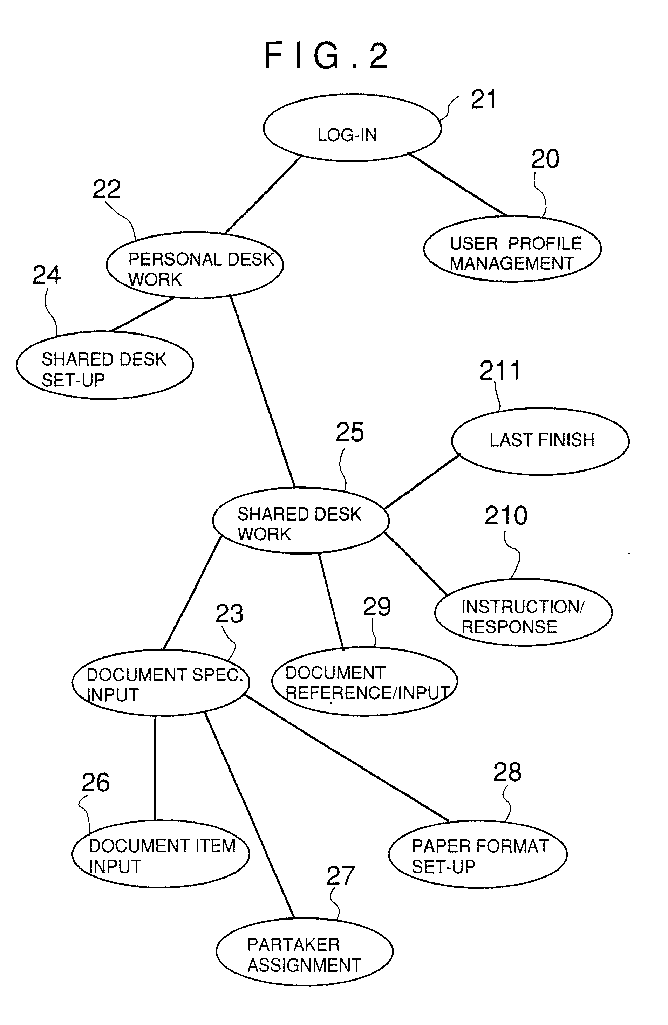

As shown in Fig. 2, log-in 21 becomes available when a user switches on a power source at a document terminal 13. At log-in, at least an ID of the user must be entered.

Then, a personal desk work 22 is set available for an ordinary user. On the other hand, user management 20 is set available for a computer system manager, in addition to the personal desk work. The user management 20 is provided for entering a new entry to a computer system user list, and is provided generally throughout the computer system.

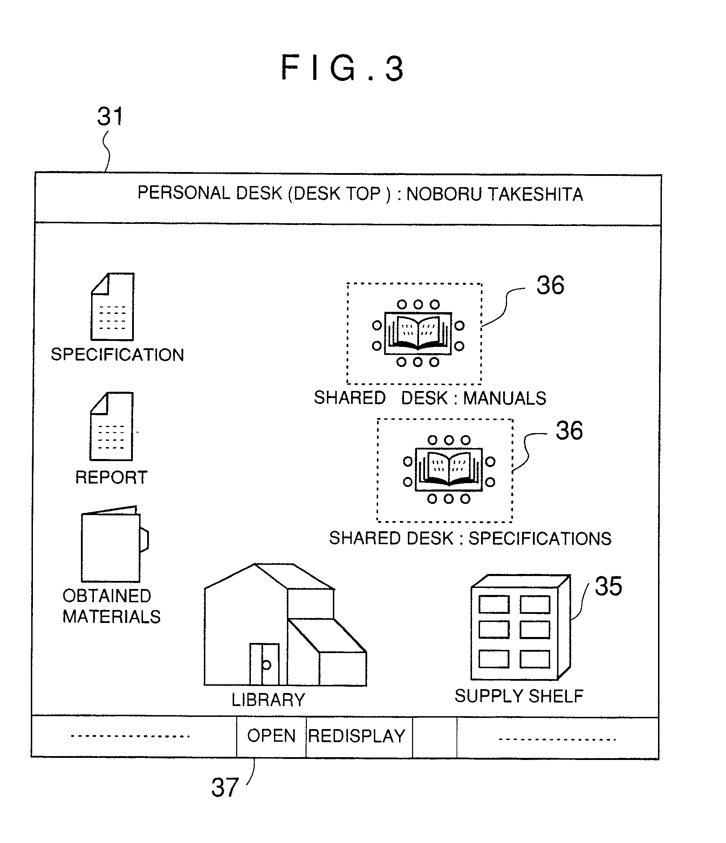

When a personal desk job 22 is set available, a personal desk display screen as shown in Fig. 3 is displayed. On the display screen, various operations available here are displayed by icons or command menus.

As for the icons, there are provided document icon, binder icon, library icon, supply shelf icon 35, shared document icon 36 and the like, and as for the command menus, there are provided open command 37, redisplay command and the like.

When both a document icon and the open command are selected, an associated document will be displayed ready for editing. The binder icon provides for a function for arranging and filing documents, wherein document icons can be entered or taken out.

The library icon provides for a function to allow a plurality of users to refer to the documents filed and arranged in order, and the same corresponds to the above-mentioned shared directory.

The supply icon 35 provides a function to newly set up a document icon, a binder icon, a shared document icon 36 and the like.

A shared desk icon 36 which is particular to the present invention, when selected together with the open command 37, sets available a given cooperative document preparation. The redisplay command is for redisplaying the icons on the personal desk 31.

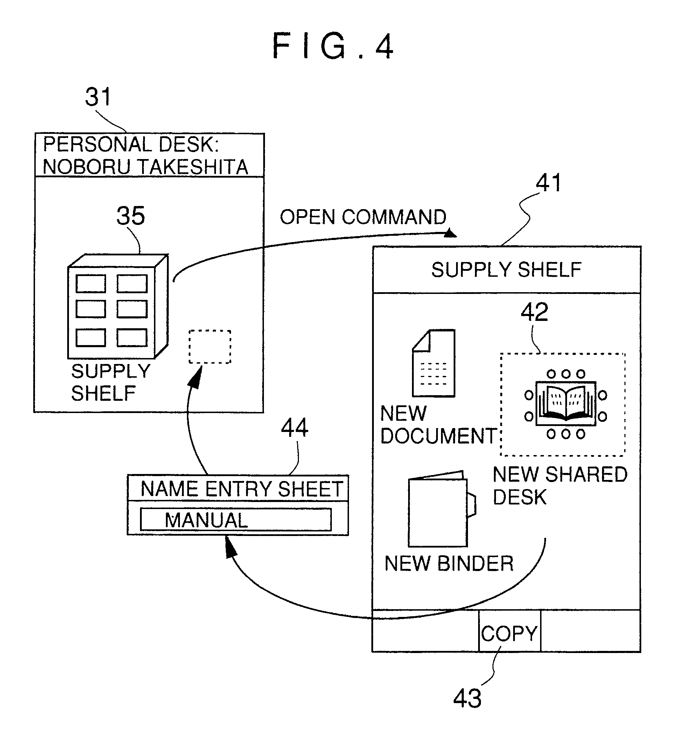

Next, a shared desk set-up 24, an operation particular to the present invention, will be described with reference to Fig. 4. When a supply shelf icon 35 is opened on a personal desk 31 by the open command 37, a supply shelf screen 41 is displayed. On the supply shelf display screen, there are displayed a new shared desk icon 42 as well as icons for a new document, a new binder and the like. Subsequently, the new shared desk icon 42 and a copy command 43 are selected on the supply shelf display 41. Then, a sheet screen 44 is displayed inquiring for the name of a shared desk.

Here, the user inputs, for example, the name of a document to be cooperatively prepared by work sharing. Upon completion of inputting of the name, a shared desk icon 36 will be displayed on the personal desk 31.

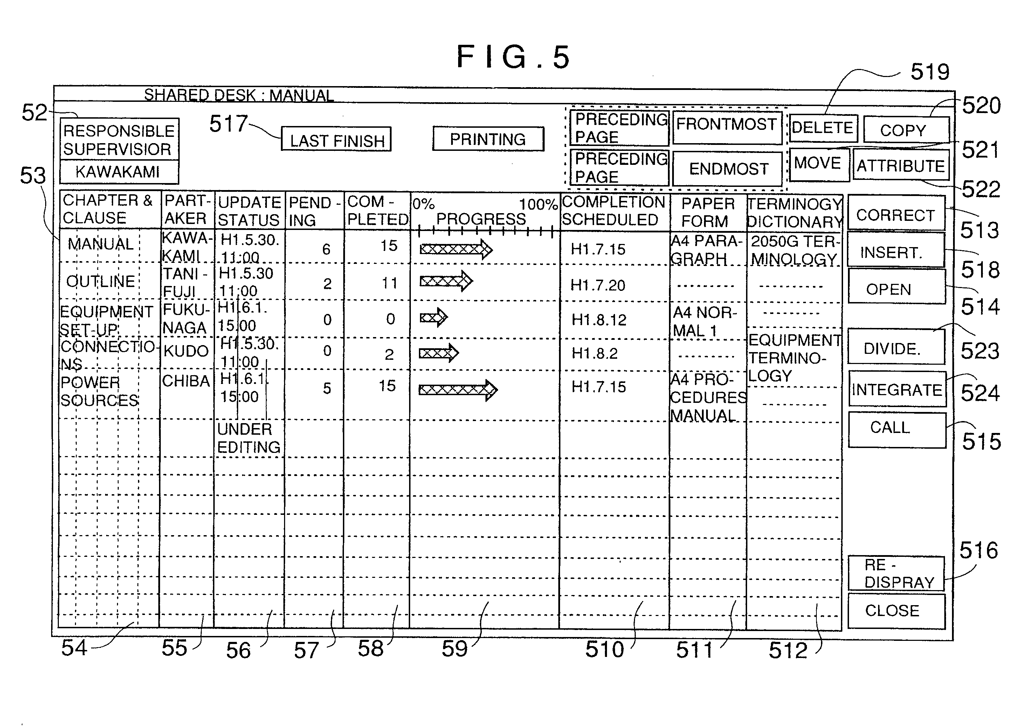

A shared desk work 25 will be described in the following. When a shared desk icon 36 is opened through the open command 37, a shared desk screen 51 as shown in Fig. 5 will be displayed.

On the shared desk screen 51, the name of a responsible person is displayed in a responsible person display area. Here, the responsible person implies a user who has set up this shared desk.

On the shared desk screen 51, there are provided an area 53 for accommodating other document specifications and work management table. The document specifications and work management table area 53 is further subdivided into a chapter and clause item display area 54, a partaker name display area 55, an updating status display area 56, a remaining or pending number display area 57, a completed number display area 58, a progress display area 59, a completion data scheduled display area 510, a paper format display area 511 and a terminology dictionary display area 512.

Immediately after a shared desk is set up, there are displayed only the name of a shared desk on the first line of chapter and clause item display area 54, and the name of a responsible person on the first line of a partaker display area 55. This item is at the top of the chapter and clause, and is called an item root hereafter. In the shared desk 51, there are provided with various types of commands from 513 to 524, which will be described hereinafter appropriately.

The shared desk work 25 will be classified roughly into a document specification input 23, a document reference/input 29, an instruction/response 210, and a last finish 211, as shown in Fig. 2.

As described above, on a newly set-up shared desk, only the names of an item root and its partaker are displayed on the first line of the document specification and job management table area 53. Thereby, a user or a responsible person will execute a document specification input 23.

The document specification input 23 is further subdivided into lower levels of a document item input 26, a partaker or assignment set-up 27 and a paper formatting 28.

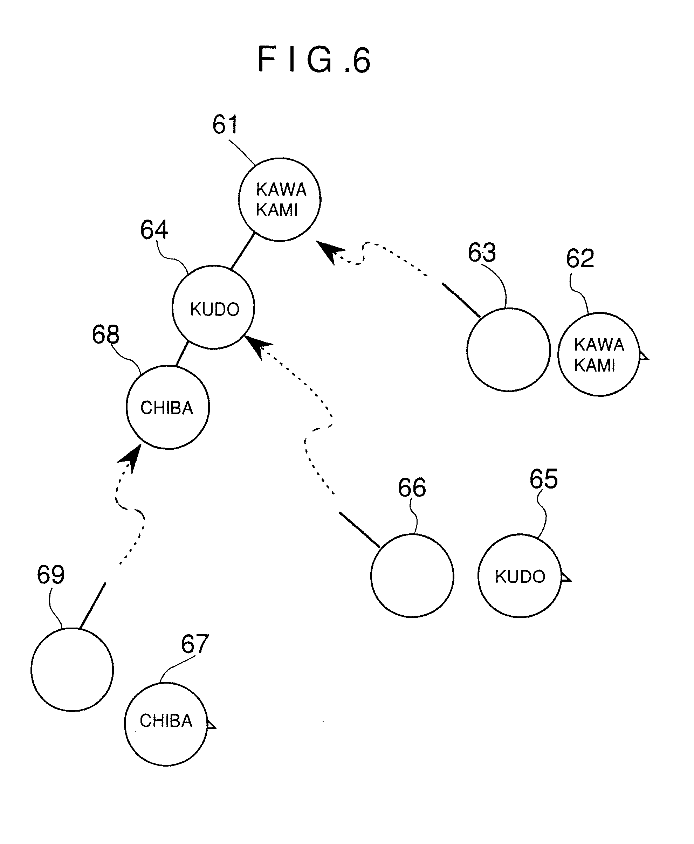

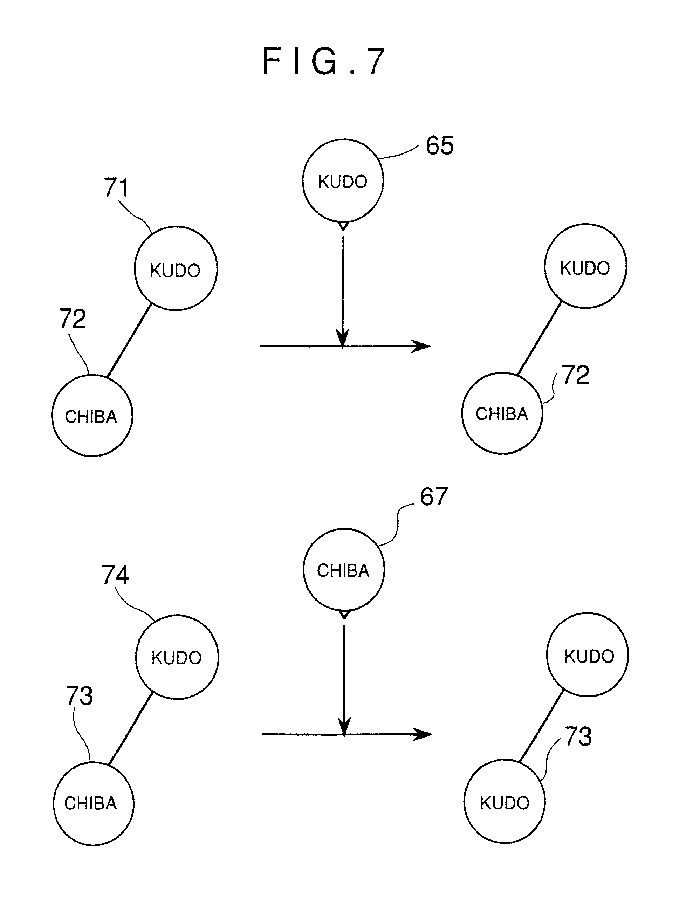

With reference to Figs. 6 and 7, the principles of the document item input 26 and partaker set-up 27 of the lower level will be explained in the following. This also corresponds to constitution i) described above.

First of all, an item root 61 is allocated as the top most item when a new shared desk is set. The partaker of this item root 61 is the responsible person.

When items are inputted, the system operations are performed in compliance with such rules as quoted below.

"A partaker is allowed to input an item only when that is in the lower level than the items which have been assigned to the partaker" ... (Rule 1)

For example, with reference to Fig. 6, being the partaker of an item root 61, Kawakami 62 is allowed to input a new item 63 which is in the lower level than the item 62. But no other users are allowed to input the same. On the other hand, if an item 64 is defined under the item root 61 and Kudo 65 is assigned as its partaker, Kudo 65 is allowed to input item 66 which is in the lower level than the item 64, but no other users are allowed to input the same. In the same way, no one but Chiba 67 is allowed to enter an item 69 which is in the lower level than an item 68 to which Chiba 67 is assigned as a partaker.

In addition, a user who inputs a new item will become a partaker of the same item for the time being. Therefore, on a newly set-up shared desk, a responsible person is allowed to enter items freely.

Next, at the time of work assignments, the system operations will conform to the following rules.

"A certain user, with respect to the lower level items than the item to which the user is assigned, is allowed to change their assignments to other discretionary partakers only when the user is also assigned to these lower level items as their partakers."
... (Rule 2)

"Only a responsible person is allowed to change a partaker of an item root to another discretionary partaker, namely, to another responsible person."
... (Rule 3)

"A certain user is allowed to transfer an assignment of an item which has been committed to the user's prosecution to another partaker of the user's direct predecessor items" ... (Rule 4)

Assuming that, as shown in Fig. 7, there exist, for example, items 71 and 72, and that partakers to both items are Kudo 65. Then, Kudo 65 is allowed to transfer an assignment of item 72, at discretion, for example, to Chiba 67. Thereafter, even Kudo 65 or Kawakami 61 is not allowed to change the assignment of item 72. Instead, only Chiba 67, a partaker in the item 73 is allowed to change the assignment of the item. The change, however, is limited either to Kudo 65 who is a partaker of item 74 or Kawakami 61 in the higher level.

Retruning to the shared desk screen 51 in Fig. 5, user operations for the document item input 26 and a work sharing assignment 27 will be described in the following.

The operation for the document item input 26 will be as follows. First, a user selects a blank line on the chapter clause item display area 54 by means of a mouse. Then, an input cursor will appear on the balnk line. The input cursor is movable in leftward and rightward directions to allow adjustment of both sides of the input location for an item. The left and right input positions for an item is used for determining a hierarchical relationship with items which have already been inputted. Then, keying in an entry key after entering a character string in an appropriate position will complete an input operation.

When a hierarchical relationship cannot be specified, or when a deviation from the item input rule (1) as explained in Fig. 6 occurs, the input operation cannot be enabled with an error message appearing on the screen. Therefore, it is necessary to reenter the item after readjusting the both end input positions in the right and left.

The partaker assignment 27 will be operated as follows. Firstly, a partaker who is desired to be changed is selected by means of a mouse in the partaker display area 55, and a correction command 513 is selected. After that, when the conditions indicated in rules (2) or (3) explained with reference to Fig. 7 are satisfied, namely, when all the IDs of a partaker in the selected portion, of another partaker of an item in a higher level than the selected one, and of a user are the same, or when the selected item is an item root and the user is its responsible person, there will be displayed an input cursor in a selected portion permitting the name of a partaker to be entered. Then, keying-in of the entry key after entering a desired name completes the input operation. When there exists no corresponding name, the input operation will not be completed, thus requiring reentry.

On the other hand, under the conditions according to rule (4) referred to in Fig. 7, namely, when the ID of a partaker of a selected portion is identical with the ID of a user, but the ID is different from that of a partaker of a higher level item, then the partaker of the selected portion will be changed to the partaker of the item in the higher level.

Hereinabove explained are the fundamental operations by the user for operating the document item input 26 and partaker assignment 27, and the outline of system operation particular to constitution i) described above.

In addition, when a user who is involved in a shared desk is set up as another partaker, whenever the user opens a personal desk 31 next time, a shared desk icon 36 will appear on the screen thereof.

Immediately after the shared desk icon 36 appears, the user may open the shared desk to set ready for processing assignments. Therefore, it is necessary for the responsible person, if desired, to specify a paper format before setting up work sharing. The paper formatting 28 corresponds to the above operation. In the following, the paper formatting 28, which corresponds to constitution ii) described above, will be explained.

Generally, a document has its own format and contents. The format provides information that defines standard character sizes, line spacings in the sentence, or the size and number of areas (or input space) to enter the contents, positions of such areas, and design patterns for decorating the page. Once specified, this will become common to all pages. The paper formatting 28 is performed to make a model document, i.e., a paper form correspond to each item in the chapters and clauses so as to define the format.

First, relative to a given chapter item, a corresponding area in the column of a paper form display area 511 is selected together with the correction command 513. Then, an input cursor will be dispalyed on the selected portion permitting a desired paper form specification to be entered. After entering a pertinent paper form, keying-in, for example, of the entry key will complete the input operation.

Thereafter, when this specified paper form is selected again in the column and the open command 514 is selected, a new document is displayed ready for the text editing.

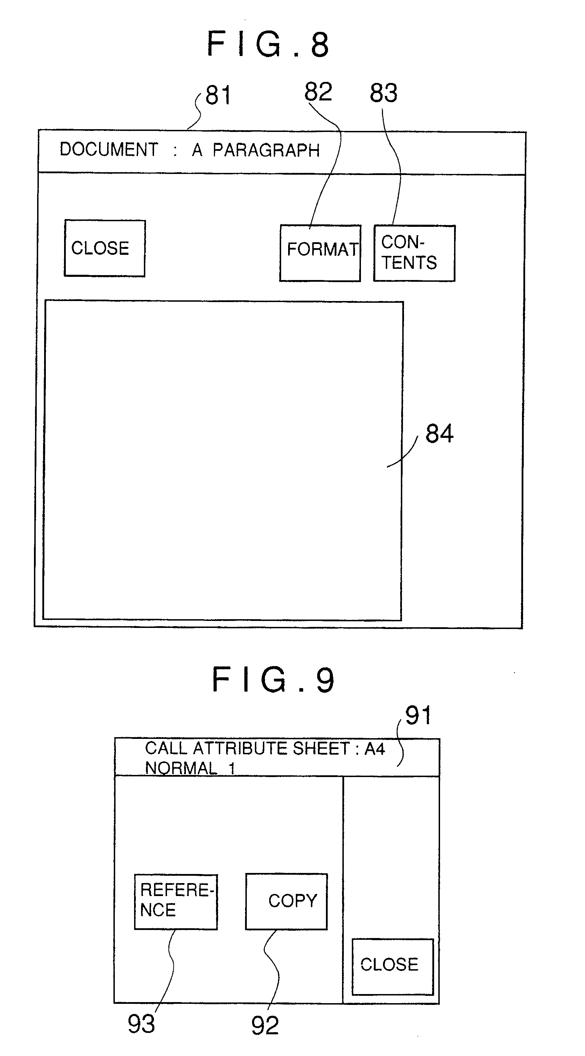

Namely, a document edit screen 81 as shown in Fig. 8 will be displayed. On the document edit screen 81, there are generally displayed, at least, a format edit designation area 82 whereby an instruction to shift to edit mode is given, a content edit designation area 83 whereby an instruction to shift to content edit mode is given, and a paper for area 84 whereby design patterns and contents according to the format are entered. Hence, after selecting the format edit designation area 82, and entering a pertinent format, the document is closed to be stored. After that, this document format will be used for documents of later use to enter the contents.

It is also possible to use the document format as a paper form, which has already been prepared. In this case, after selecting the area where the paper form is entered, and the call command 515, there are further selected a personal desk screen 31, and a document icon or the same in the binder, or a chapter clause item from other shared desk. Then, a call attribute sheet screen 91 as shown in Fig. 9 will be displayed.

On the call attribute sheet screen 91, there are at least a copy designation area 92 for designating to copy and retain the document, and a reference designation area 93 for designating simply a reference thereof.

Once a document is copied and retained, the original document will remain unchanged, even when the retained document is opened and its format and contents are edited. On the other hand, in the case of the document reference, the contents of an original document will be changed if edited, it being the original document that is opened for reference. Thereby, according to the objects, either one of the areas should be selected, and so the sheet should be closed. hereinabove described are the operations in the use of the existing document formats.

One who is allowed to define a paper form for a given item, is restricted only to a partaker of its parent item. However, limited to the case of an item root, a partaker of the item is allowed to define a paper form. Further, how the paper form acts or influences operations during the document reference or inputting will be described later at a document/ reference input 29.

Hereinabove explained are the operations by the user and an outline of the system operations with respect to constitution ii) described above.

When document items are inputted and assigned to appropriate partakers, it is set ready for each partaker to perform the document reference/input 29.

When a certain partaker opens an item assigned to the partaker for the first time, a new document will be allocated. The format of the new document will be the same as that of the document which has been specified as a paper form.

In case a paper form is not determined for an item, the paper form specified for items in the higher level will be used instead. Further if it is not specified in the higher level, then, that in the still higher level, or still more higher level will be used instead. If an item root is not also provided with a specified paper form, a standard new document will be allocated. Therefore, with respect to constitution i) described above where no function of the paper form setting 28 is provided, there will be allocated a new document of a normal format.

When a document is allocated to an item, any user of the shared desk is allowed to open the document. When the document is opened, a document edit screen 81 as shown in Fig. 8 will be displayed.

Here, if a user who opened a document finds out that the user is a partaker of its item, the user is allowed at least to update its contents. In addition, an existing document can be made to correspond to the item. Because the operations, in such occasions are the same as in setting-up of an existing document as a paper format, details will be omitted here.

Next, the instruction/response 210 will be described in the following. An instruction is capable of being given to a related item, requesting a response from a partaker thereof. In addition, the contents or statements of exchanged instructions and responses are stored available for reference at any time. Incidentally, this instruction/response 210 corresponds to constitutions iii) and iv) described above.

A procedure for approval of a pertinent response is introduced. Then, the number of the instructions/responses approved is displayed on an approval no. display area 58 while the number of the instructions/responses pending of approval is displayed on a remaining no. display area 57. In other words, this is, in effect, to lay open the performance of each partaker. This in turn will introduce psychological effect on each partaker, urging to expedite the partaker's assignment without failing in responding. Incidentally, this relates to constitution vii) described above for facilitating the work management, and is not directly related to constitution iii) described above.

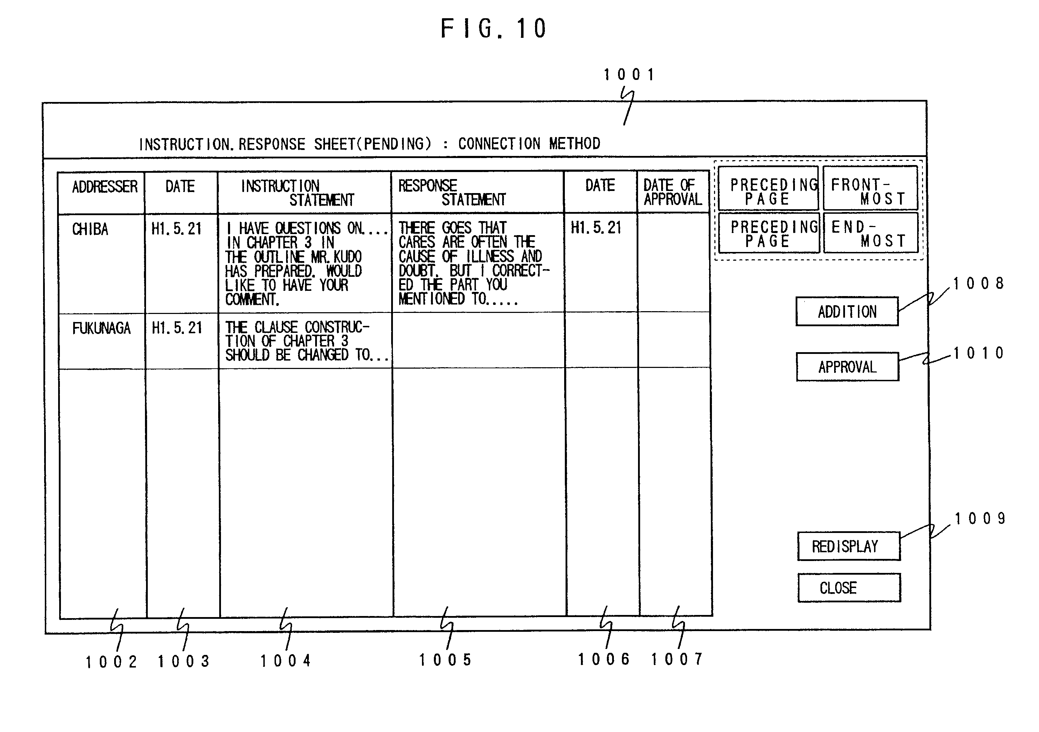

When one wishes to give an instruction to a relevant item, one selects a particular position corresponding to the item in the remaining no. display region 57 by means of a mouse. Then, a remaining or pending instruction/response sheet screen 1001 as shown in Fig. 10 will be displayed. On the remaining instruction/response sheet screen 1001, there are provided an addresser (sender) display area 1002, a date of transmission display region 1003, an instruction content display region 1004, a response content display region 1005, a date of response display region 1006, a date of approval display region 1007, and other command regions.

When no instruction has been received, or when although an instruction was given, a response thereto was already made, and also an approval was obtained, there will be displayed no instruction contents nor response statement. On the other hand, if there have been received some instructions, but they remain unprocessed or pending, at least their addressers, dates of transmission, and the contents of instructions will be displayed separately corresponding to each instruction as shown in this example.

Hence, if one wishes to give an instruction hereat, one selects an addition command 1008. Then, if the user is not a partaker of this item, the name of the user will be displayed in a blank section of the addresser display region 1002, and the date will be displayed in a blank of the date of transmission display region 1003. Thereby, an input cursor is displayed in a space of the instruction statement display region 1004 permitting an instruction statement to be entered. Keying-in of the entry key after entering a pertinent statement will effect the entry, completing the operation.

Users other than the person who has given instructions are allowed to refer to the instruction statement inputted as described above, by opening the instruction/response remaining no. sheet screen 1001.

Next, a procedure for opening the instruction/response pending no. sheet screen 1001 to find one's assignments therein and to enter one's response thereto will be explained below.

At first, one selects the response statement display region 1005. When the user is a partaker of the item, and when the instruction statement area is not blank, but the response statement area is blank, then, an input cursor will be displayed on the response statement area. Hence, after entering a pertinent statement, an entry key, for example, is pressed to enable for the display of a response date and time. After the response entry is completed, other users are also allowed to refer to such statements or contents.

In the following, operations for approval of response statements in response to one's instructions will be described.

First, one opens the instruction/response remaining no. sheet screen 1001. Then, after selecting a response statement area for an object of approval, the approval command 1010 is selected. Here, if the user is the sender of an instruction for the response statement, this event is presumed to have been approved, and diappears from the screen through regeneration.

When one wishes to refer to the instruction/response contents or statements that have been approved, one selects the completed no. display area 58 corresponding to the item, and the open command 514. Then, a screen of the same format as in Fig. 10 will be displayed, and the instruction/response statements that have been approved will be displayed likewise. In this process, however, additions of instruction, response and approval is not allowed.

According to the procedures as stated hereinabove, the shared document preparation is performed.

It is through this instruction/response means as described above that contradictions arising from the work sharing among partakers are eliminated. Those that do not relate directly to the essential parts of a statement, however, will be put off for later processing. For example, no one will be concerned too much about disagreement in numbering of chapters, clauses, drawings and tables, while one is working hard examining the contents of a statement. In addition, a standardized layout of the contents or statements can be attained by specifying a paper form in advance before starting work assignments (there are cases where the contents can also be defining the paper form). However, there are cases where a paper form cannot be defined until the contents of a statement is completed to accommodate therein.

From the reasons as described above, such contradictions that do not affect directly or essentially the contents will be corrected in batch afterwards its essential portion is completed. This correction procedures, however, are very cumbersome and time-consuming. Therefore, it is required for the document shared preparation management system to support or replace such cumbersome operations with a computer processing. A last finish processing 211 corresponds to this. This portion also relates to constitutions v) and vi) described above.

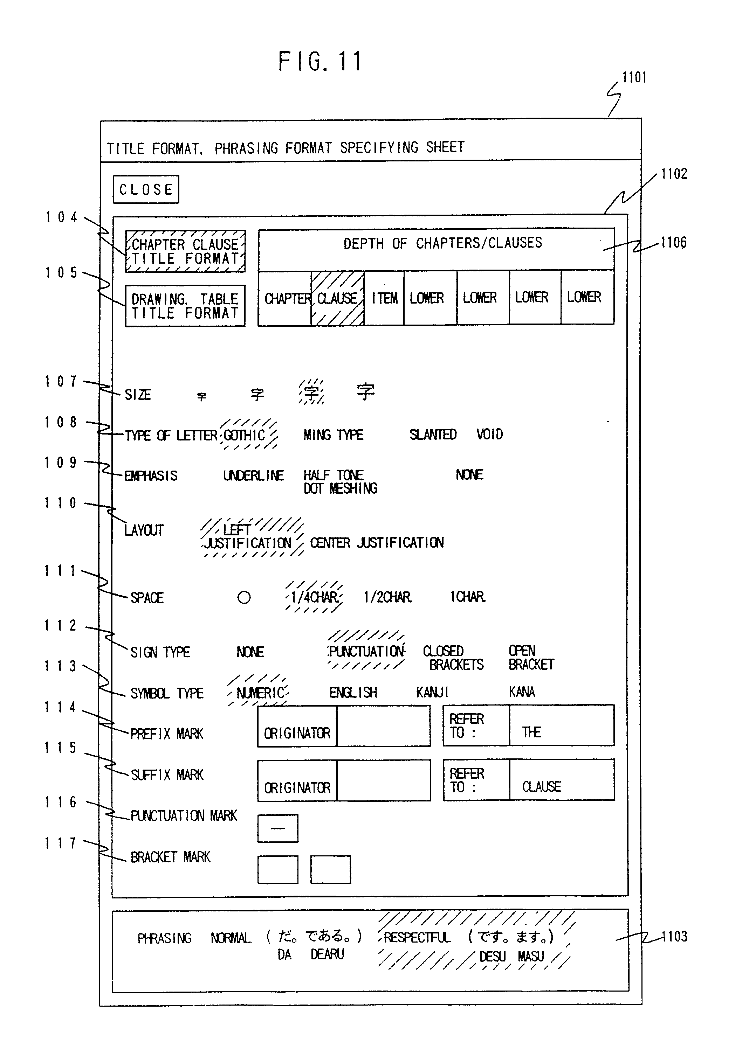

When the contents of a document are completed, the user selects the last finish command 517 on the document shared preparation management screen 51 to display a title format/phrasing format sheet screen 1101 as shown in Fig. 11.

The title format/phrasing format specifying sheet screen 1101 is subdivided into a title format set-up region 1102 and a phrasing format set-up region 1103. The title format set-up region 1102 is provided with a chapter clause title format set-up mode and a drawing and table title format set-up mode, and each mode can be effected by selecting either of a chapter clause title format set-up region 1104 or a drawing and table title format set-up region 1105. An example shown in Fig. 11 illustrates the chapter clause title set-up mode status.

The chapter clause title format set-up mode can be further subdivided into a hierarchical structure of each chapter clause format set-up mode, selectable through a chapter clause depth designation region 1106. Here, format items expressed by the chapter clause depth are the same for all cases.

As for the format items, there are character size 1107, type of characters 1108 such as Gothic, Ming style or the like, emphasis 1109 such by underlines, half-tone dot meshing or the like, layout 1110 such as left or center justification or the like, character spacing 1111, sign types 1112, symbol types 1113 to be used as sign mark, prefix symbols 1114 such as "Dai" (equivalent to article "The") used in "Dai x Sho" or the chapter x, suffix symbol 1115 such as "Sho" (equivalent to "chapter") used in "Dai x Sho" or the chapter x, delimiter symbols 1116 such as "." or "-" when employing delimiters such as "2.1" or "1-1" for the sign types 1112, and brackets and parenthesis symbols closed or open such as "(a)", "[1]", "a)" or "1]" selectable as the sign types.

Once a closed or open bracket is designated for a sign type, no other sign type in a deeper clause or item can be made into a delimiter type according to the rule set here.

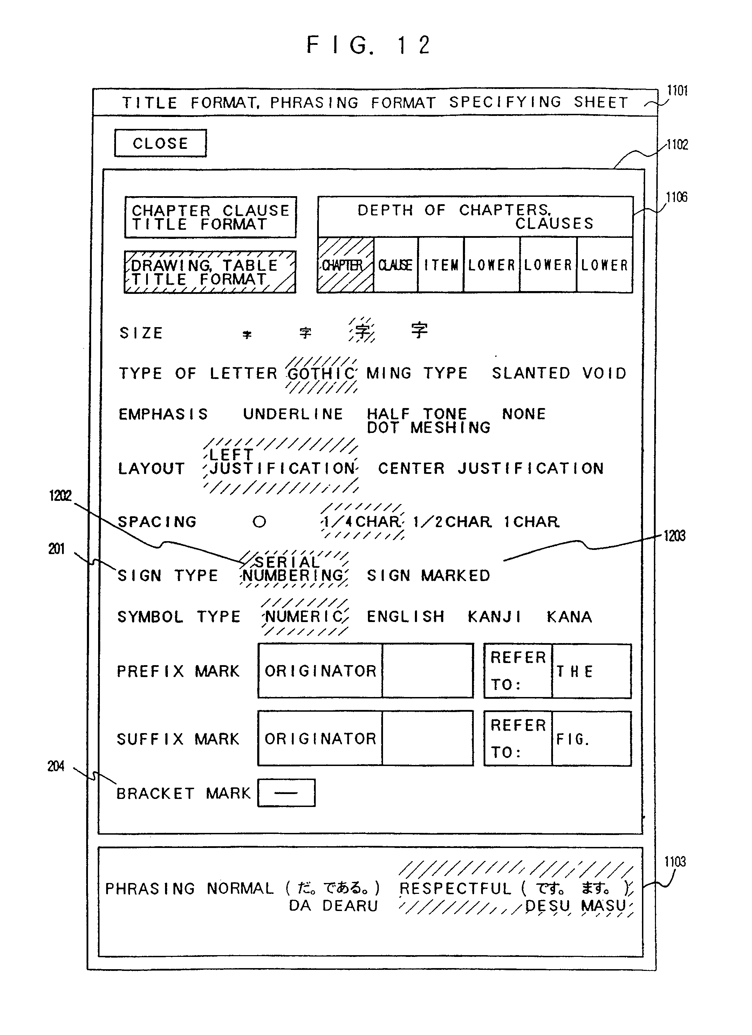

Details of the title format set-up area in the drawing and table title format set-up mode are shown in Fig. 12. The contents of its items are almost the same as in the chapter clause title format set-up mode, except that there are no bracket and parenthesis symbols 1117, and that the contents of sign type 1112 have been changed to the sign type 1201.

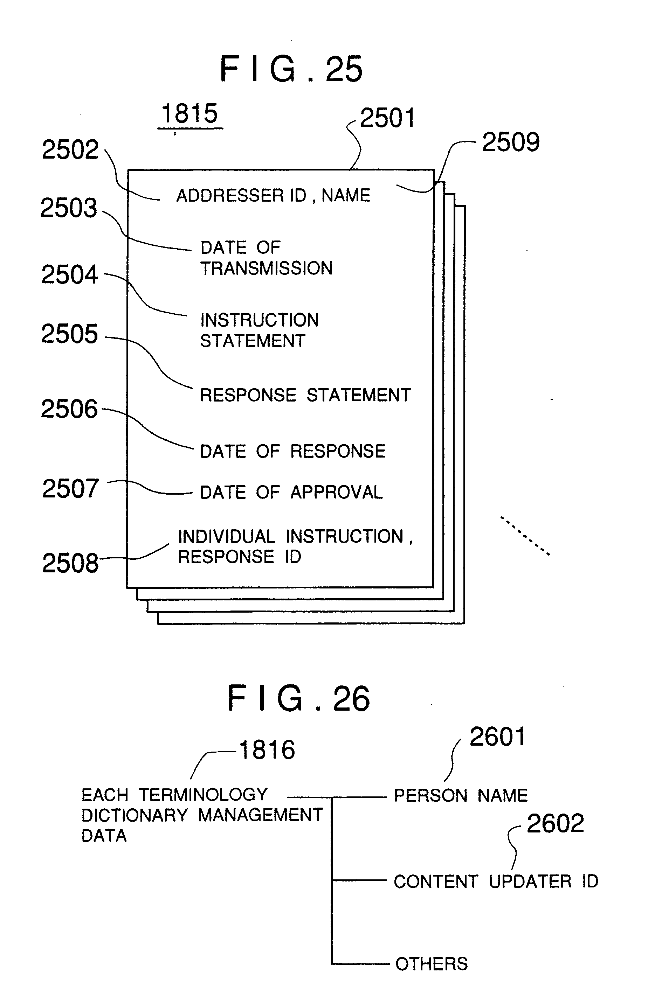

The sign type 1201 has a serial numbering 1201 and a sign attacher 1203. When the serial numbering 1202 is selected, for example, in the chapter depth mode, serial numbers will be given consecutively throughout chapters of a document as shown in Fig. 25 and Table 32. On the other hand, when the serial numbering 1202 is selected in the clause depth mode, synthesized signs such as "Fig. 2-1" or "Table 2-3" will be given wherein a sign mark of a chapter to which it belongs, a delimiter symbol 1204, and a serial number it has under the chapter are combined together to be attached. In the same way, when the serial numbering 1202 is selected in the item mode, there will be given, for example, "Fig. 2.1-1" or "Table 2.1-3". Here, once the serial numbering 1202 is designated, other chapter clause modes in deeper level cannot be selected.

With regard to the phrasing format 1103, there can be selected between a normal expression ending such as "...da. or ...dearu." (...is...) and a respectful expression ending such as "...desu. or ...masu." of the same meaning.

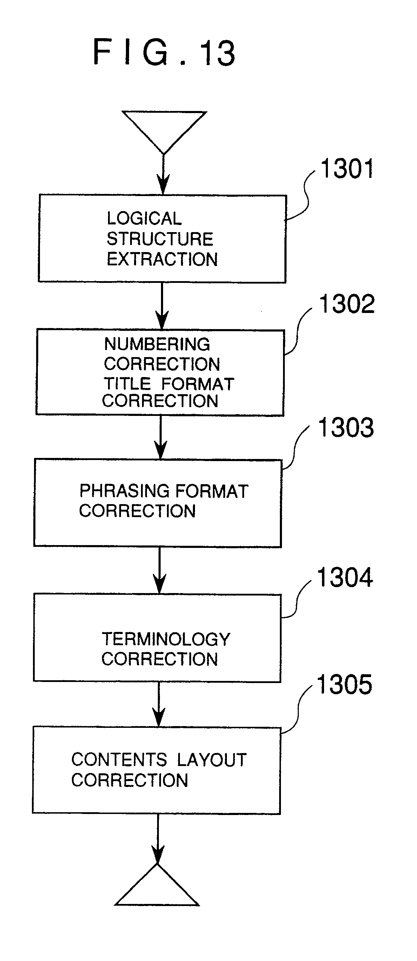

When this sheet screen is closed after setting up the formats as above, the last finish operation 211 is executed in accordance with the procedures as shown in Fig. 13.

First in a step 1301, all documents that correspond to the chapter clause item display region 54 are searched, and analyzed of their contents to extract their logical structures.

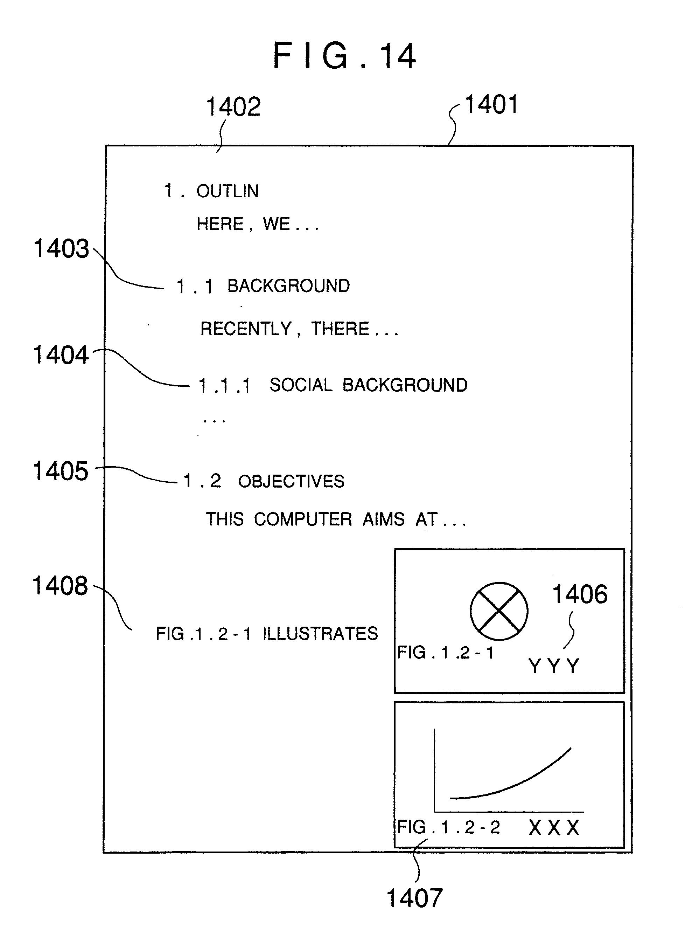

For example, let us presume here that a document 1401 shown in Fig. 14 corresponds to a child item of an item root, and that this item is the first child item of the item root, namely, it is indicated on the second line on the chapter clause item display region 54.

The document 1401 has chapter clause titles 1402, 1403, 1404, 1405 and drawing titles 1406, 1407 and the like.

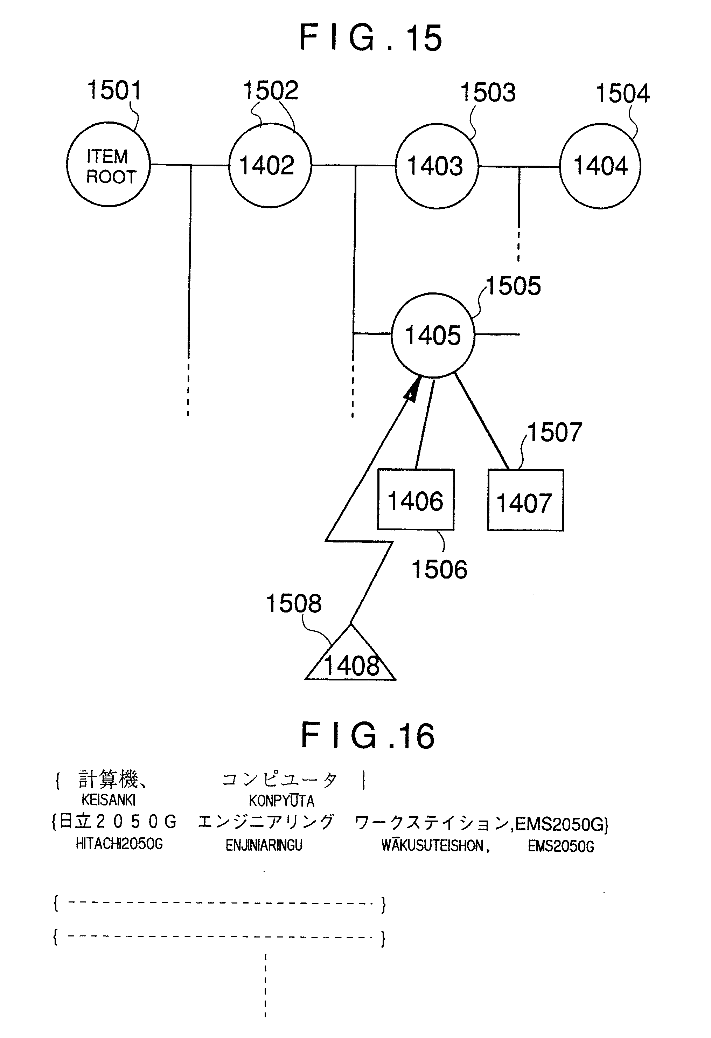

In the extraction of the logical structures, according to such titles found in the document, hierarchical structures in chapters and clauses, drawings and tables to belong to each chapter and clause, and a sequential order of arrangement for each drawing and table in the chapters and clauses are identified and specified, generating data as shown in Fig. 15.

Namely, under the item root 1501 there is a chapter clause 1502, under which there is a chapter clause 1503, still under which there is a chapter clause 1504, and so on. In addition, the chapter clause 1502 has a child chapter clause 1505 under the chapter clause 1503, and this chapter clause 1505 has a drawing 1506 and next to it another 1507 and the like. Also actual locations in the document of each node of chapters, clauses, drawings and tables (for example, in what order or number they should appear in paragraphs, drawings or tables) will be specified in the data.

Due to the recent advancements in the logical structure analysis of sentences, hierarchical structures in chapters and clauses have been enabled almost completely to be analyzed as referred to in the above-mentioned Literature [3]. However, with respect to the drawings and tables, there still remain some ambiguity in identifying their chapters and clauses to which they should belong. This will be solved soon in near future, but meanwhile it might be considered to suffice by composing the numbering of drawings and tables such as Drawing Titles 1406 or 1407 in combination of the sign of (the former two numerals) and the sequential order (the latter two numerals) in the chapter and clause it belongs to. Such arrangement will be possible by the current technology, and needs not be put off for later processing as referred to previously.

When a logical structure is unable to be specified, an error message is displayed interrupting further operation. As such occasions there are, for example, a case where a chapter title such as 1402 exists in a document of a grandchild item root relative to an item root on the chapter clause item display region 54, or a case where an item title such as 1404 exists abruptly after a chapter title such as 1402. Jumping in the numbering of chapters, clauses, drawings and tables will not be considered error because it will not affect the hierarchical structures and sequential orders.

In parallel with extraction of the logical structures, a reference position in drawings and tables, or chapters and clauses in the text should be detected and correlated with a logical structure.

Namely all character strings such as 1408 in Fig. 14 are searched, and their locations in the document relative with each node in Fig. 15 are obtained and stored as shown in 1508. This method has been applied widely in recent years together with the application of the logical structure analysis.

After logical structures have been extracted, corrections of numbering and title format arrangement are performed at step 1302. A hierarchical structure of chapters and clauses and their sequential orders of arrangement, membership of drawings and tables relative with chapters and clauses as well as their sequential orders within chapters and clauses can be clearly understood from the logical structure as shown in Fig. 15. Thereby, further in combination with Figs. 11 and 12, the above operation can be performed readily. in addition, in line with the above, correction in the reference positions will be made in the same manner.

Upon completion of step 1302, the phrasing format is corrected in step 1303 in accordance with the format specified in the phrasing format region 1103.

With the recent advancement in the natural language analysis methods, automatic text proofread systems have been widely applied, as referred to in the above-mentioned Literature [4]. Thus, details of the systems will not be necessary to be given here. In such systems, however, wording or phrasing is generally arranged to agree with those having the most frequent occurrence of usage in the text. There will be no particular problem anticipated with such systems provided that a single person prepares every parts of a document by himself. If, however, the document is prepared by work sharing among many partakers, they will not be always desirable.

For example, if a certain user who is fond of using a particular phrasing is assigned with a large portion of a document, his particular preference in phrasing will result to be adopted in the final document. There should, however, be pertinent phrasing most suited to the purpose of the document or the readers of the document. Therefore in this embodiment, a document format is specified in advance before starting preparation of documents.

After completing the phrasing format correction, conformity in terminology is checked in the next step 1304. For this purpose it will be necessary to prepare and specify a terminology dictionary as shown in Fig. 16, in the terminology dictionary name display region 512.

The terminology dictionary is a collection of a set of terms 1601. Terms belonging to a set of terms are synonyms having the same meaning. The term placed and defined first becomes the representative in the synonyms, thereby, all other terms with the same meaning will be converted to the representative word.

For example, if a word "keisanki (computer in Kanji)" 1602 and a word "kompyuta (computer in Katakana)" 1603 are defined in a set of terms, the description "kompyuta (computer in Katakana)" will be converted to "keisanki (computer in Kanji)" in the text.

The operation for setting up a terminology dictionary in the terminology dictionary name display region 512 will be as follows.

First, a section in the terminology dictionary name display region 512 corresponding to a relevant chapter clause item, and the correction command 513 are selected. Then, an input cursor is displayed thereon allowing an appropriate character string to be entered. When, for example, the entry key is pressed, the entry of a terminology dictionary name is completed. Only a partaker of the parent item relative to this item is allowed of such operations, except for the case of an item root where partakers of this item are allowed of such operations.

Next, the user selects the inputted terminology dictionary name section, and the open command 514. This is for the first time for this section to be executed open 51. If the user is a partaker of a parent item with respect to this item, a new terminology dictionary will be allocated and will be displayed on the terminology dictionary edit screen. The terminology dictionary edit screen only being a text editor and a statement being permitted to be entered according to the manner as shown in Fig. 16, details will be omitted.

When a terminology dictionary is already allocated, it will be displayed on the terminology dictionary edit screen. It is also possible to designate an existing terminology dictionary instead. Operations for such designation is the same as for the paper or document formats, thus the call command 515 is used. As in the case of a paper form name inputting, operations for the call command 515 have the same restrictions.

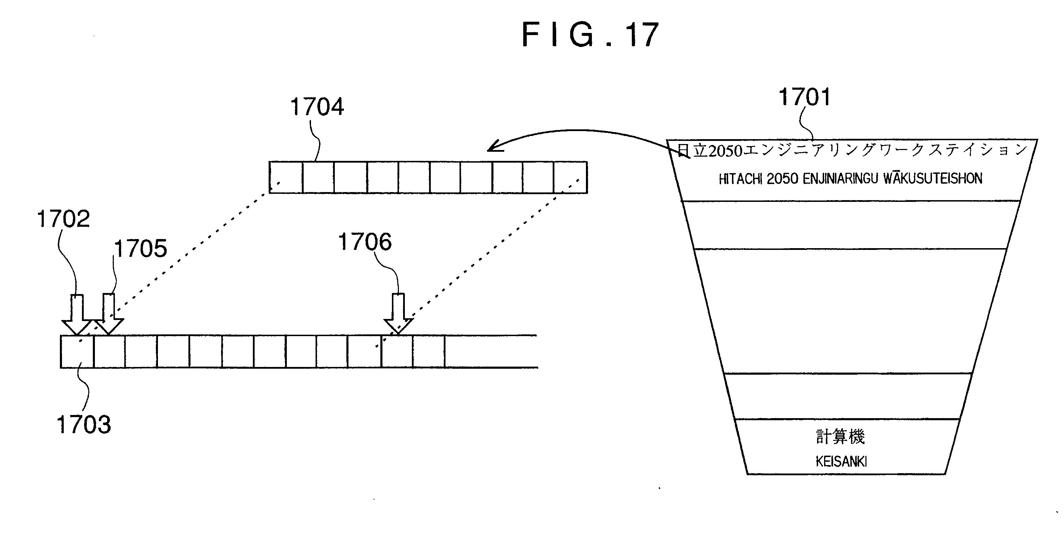

A method for converting a set of synonyms to a representative word will be explained in the following with reference to Fig. 17.

The following operations will be repeated for all documents corresponding to the chapter clause items 54.

① For all terminology dictionaries defined for a given item and its direct ancestry items, terms contained therein are rearranged in a decreasing order of character length, namely from the longer words to shorter ones, which will be named a decreasing length order term list 1701.

② A notice point 1702 in a sentence is set up at a first character space 1703 of a document which corresponds to this item.

③ Terms 1704 are read out of the decreasing length order term list 1701 in the decreasing order of character length, and the notice point 1702 and a first character of the term 1704 are arranged to coincide with each other for collation.

If the collation fails, a different new term will be read out of the list 1701, to repeat the same operation.

If all collation fails with every terms in the decreasing length order term list 1701, the notice point 1702 is shifted down by a character to a notice point 1705, and the same operations are repeated from the first step with the decreasing length order term list 1701.

④ On the other hand, if the collation succeeds, the term is converted to its representative term, then the notice point 1702 is shifted down by the number of its representative term to a new notice point 1706. Returning to ③, the operation is repeated with a first term read out of the decreasing length order term list 1701.

⑤ The operation is repeated until the number of characters between the notice point and the last character of the present document becomes smaller than that of the shortest term in the decreasing length order term list 1701. Thereby, sets or synonyms will be converted to optimum representative terms.

Upon completion of the terminology organization 1304, a content layout adjustment 1305 is performed.

If paper sheet forms are defined without omission in the section of the paper format name display region 511 before starting a document preparation, there will occur no problem. It is, however, often the case with the paper sheet forms that they are defined afterwards. Therefore, here will be performed an operation for adjusting the formats of documents corresponding to the chapter clause item 54 to agree with the paper sheet format.

The detail of the last finish 211 is explained above.

Hereinabove stated are the system functions with respect to the user operations. Further, the relationship between the structure of the data 12 and the system functions will be described in the following.

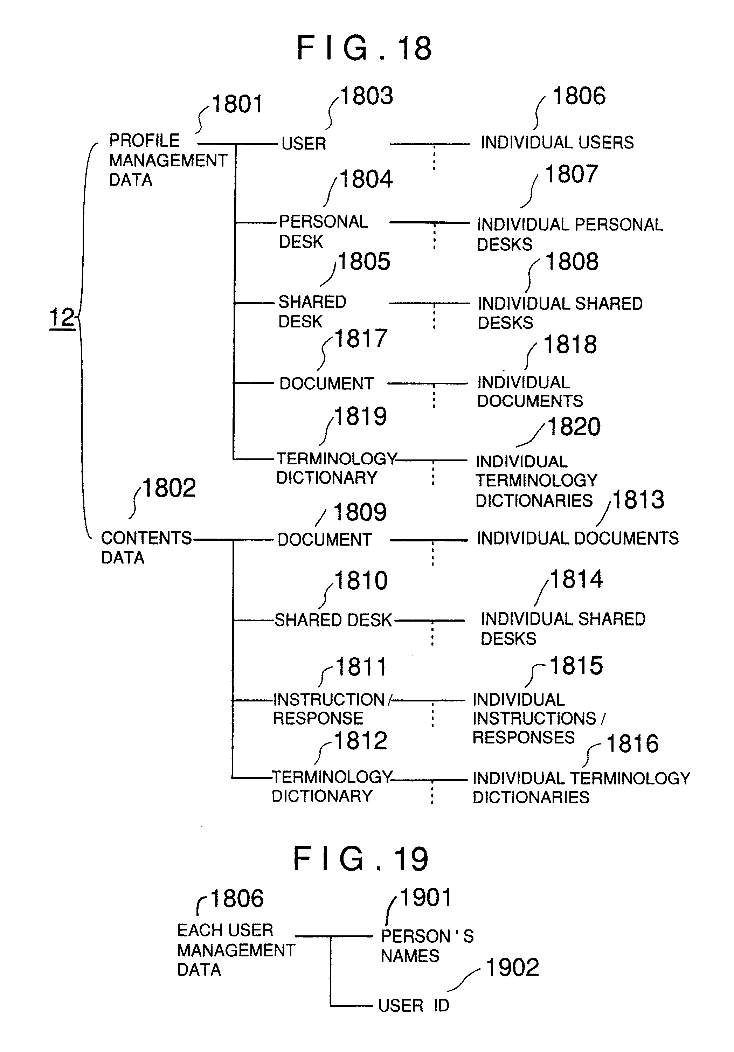

The data 12 is further divided into management data 1801 and content data 1802, as shown in Fig. 18.

The management data 1801 is further subdivided into user management data 1803, personal desk management data 1804, shared desk management data 1805, document management data 1818, and terminology dictionary management data 1819.

The user management data 1803 has each user management data 1806. The personal desk management data 1804 has each personal desk management data 1807 for each user. The shared desk management data has each shared desk management data 1808. The document management data 1817 has each document management data 1818. The terminology dictionary management data 1819 has each terminology dictionary management data 1820.

On the other hand, the content data 1802 is subdivided into document content data 1809, shared desk content data 1810, instruction/response content data 1811, and terminology dictionary content data 1812.

The document content data 1809 further is provided with each document content data 1813; the shared desk content data 1810, with each shared desk content data 1814; the instruction/response content data 1811, with each instruction/response content data 1815; and the terminology dictionary content data 1812 with each terminlogy dictionary content data 1816.

Each user management data 1806 comprises at least a name 1901 and a user ID.

Thereby, when the user enters his name and user ID through the terminal at the log-in 21, they will be transmitted to the host computer 11, where each user management data 1806 existing under the user management data 1803 is compared with what is inputted by the user. If existence of the identical user is verified therein, the following operations will be carried out.

At first, a file for a given user to write in is read out in a personal desk management data 1807. The file name of each personal desk management data 1807 being tagged with the user ID, it can be readily read out when the user is defined.

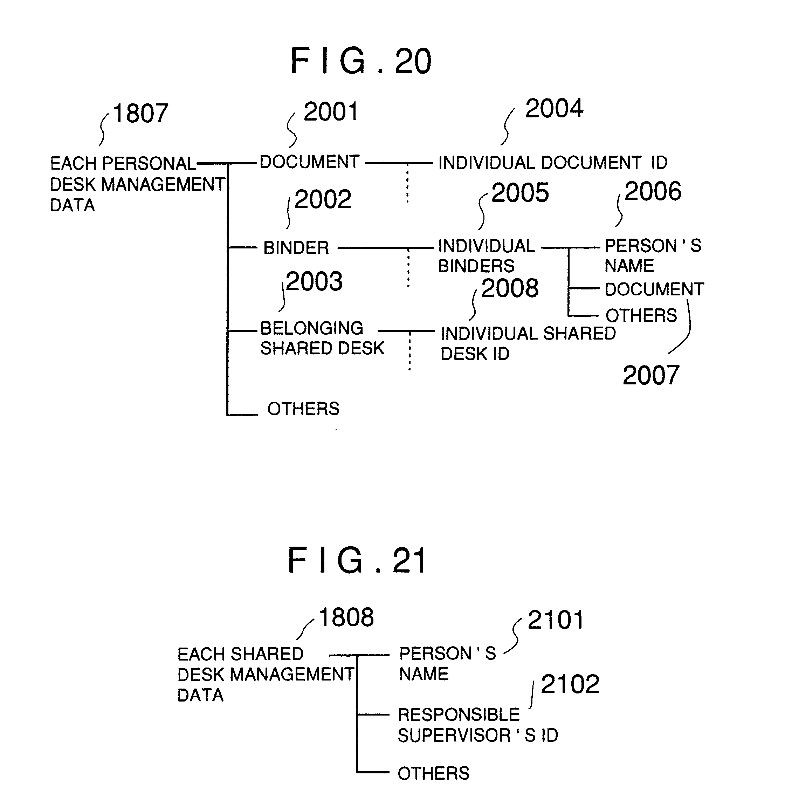

Each personal desk management data 1807 is further divided, as shown in Fig. 20, into a document management data 2001, a binder management data 2002, a membership shared desk management data 2003, and the like.

The document management data 2001 is further divided into each document ID 2004. Here, the document ID is allocated by the host computer 11 when each document is newly set up, and each document management data 1818 and each document content data 1813 have this document ID for their file names.

Each binder management data 2002 is further divided into individual binder management data 2005. Further, each the binder management data 2005 comprises a name 2006, a document management data 2007 and the like. The document management data 2007 being the same in the structure with the document management data 2001, its explanation is omitted here.

The membership shared desk management data 2003 is further divided into each shared desk ID 2008. The membership shared desk management data 2003 has information as to which shared desk the user belongs to. This will be necessary for displaying an icon on the shared desk.

Thereby, the host computer 11 reads out files of each document management data 1818 expressed by each document ID 2004 under the document management data 2001 and the binder 2002, in each personal desk management data 1807. The detail of the each document management data 1818 will be described later.

Next, the file of each shared desk management data 1808 corresponding to each shared desk ID 2008 is read out. The shared desk ID being used for the file name of each shared desk management data 1808, it can be read out when the shared desk is defined. In addition, the shared desk ID is not defined by the user, but automatically allocated by the host computer when the shared desk is newly set up.

As is shown in Fig. 21, there are at least a name 2101 and a responsible person ID 2102 in each shared desk management data 1808.

Finally, the host computer transmits each personal desk management data 1807 for the present user, each document management data 1818 for all documents belonging to the same, and each shared desk management data 1808 to which the present user belongs, to the document terminal 13 whereon the user had logged in.

Then, the document terminal 13 displays a personal desk screen 31 based on the transmitted data, and is set ready for user operation.

Next, data operation for the new shared desk set-up 24 will be described below.

As explained in Fig. 4, after the name of a shared desk was entered through the name input sheet screen 44, further entered to the host computer from the document terminal 13 are the present user ID (which will be called UID_X, tentatively), that the present user has set up a shared desk, and the name of the shared desk, waiting for a response from the host computer 11.

Then, the host computer 11 allocates an ID (which will be called tentatively CID_X) to the shared desk, and defines a file having the CID_X as the name in each shared desk content data 1814.

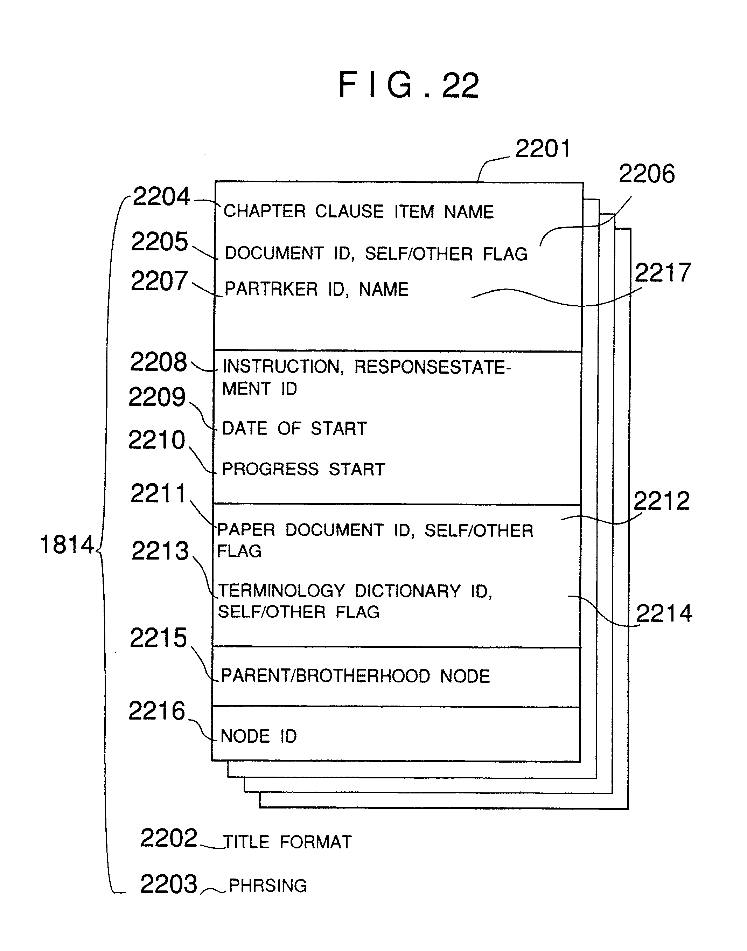

The shared desk content data 1814 comprises a hierarchical structure node 2201, a title format 2202, and a phrasing format 2203 as shown in Fig. 22.

The hierarchical structure node 2201 comprises: a chapter clause item name 2204; ID 2205 of a document corresponding to the item; a document self/other flag 2206 indicating as to whethr the document is called up by the call command 515 or newly created in this shared desk; a partaker ID 2207 of the present item; a partaker's name 2217; an instruction/response ID 2208 of the present item; a starting date and time 2209 when the document is first opened corresponding to the present item; a progress status 2210; a document ID set up as a paper format, i.e., paper sheet document ID 2211; a paper sheet self/other flag 2212 indicating as to whether the paper sheet document is defined by the command call 515 or newly prepared in this shared desk; a terminology dictionary ID 2213; a terminology dictionary self/other flag 2214 indicating as to whether the terminology dictionary is defined by the call command 515 or is newly prepared in this shared desk; a parent/brotherhood node 2215 indicating a hierarchical relationship between the nodes; and a node ID 2216. However, only the name of the item root at the top level, its partaker and node ID are recorded here.

Namely, there are recorded the name of a shared desk entered from the document terminal 13 as a chapter clause item name for a first node 2201, UID_X as the partaker ID 2207, a name 2201 of the user having UID_X as the partaker's name 2217, and 0 as the node ID 2216. The node ID is unique to the shared desk.

Nextly, each shared desk management data 1808 having the above CID.X for its name is defined in the same manner, and the name and UID_X of the shared desk which has been entered as its name 2101 and responsible person ID 2102 through the document terminal 13 are stored.

Then, the CID_X is added to each shared desk ID in each personal desk management data 1807 of the present user. Upon completion of the above operation, the host computer sends CID_X to the document terminal 13.

Thereby, the document terminal 13 adds this CID_X to the personal desk management data in the present user's possession, then displays a newly set up shared desk icon 36 on the personal desk screen 31, set ready for user operation.

Now, data operation for the shared desk job 25 will be described in the following.

When the user opens the shared desk icon 36, the document terminal 13 transmits a designated shared desk ID (which will be called CID_X tentatively) to the host computer, requesting the supply of each shared desk management data 1808 and each shared desk content data 1814.

In response to this request, the host computer 11 reads out each file having the name of CID_X from each shared desk management data 1808 and each shared desk content data 1814, and sends it to the document terminal 13.

Thereby, based on the transmitted data the document terminal 13 displays a shared desk screen 51 as shown in Fig. 5. The screen is set ready for user operation.

Next, data operation will be explained for the document item input 26. When a new chapter clause item is entered, a node ID 2216 of its parent's chapter clause item, another node ID 2216 of its brother's chapter clause item (if there is none, a negative value is entered as a rule, here), the name of a new item, and user ID (which will be called UID_X) will be sent to the host computer 11 requesting a set-up of a new item therein.

Thereby, in response to this request, the host computer 11 newly sets up a hierarchically structured node 2201 and allocates a new ID (which will be called NID_X tentatively), wherein the NID_X is recorded in a node ID2216, the item name which the document terminal 13 transmited is recorded in a chapter clause item name 2204, the UID_X which the document terminal 13 transmitted is recorded in a partaker ID2207, and the parent and brother node ID transmitted in the same manner are recorded in a parent brother node 2215. A child node is given negative value because there exists none.

Here, a new ID is generated for an instruction/response statement, and a file having this for its name in each instruction/response statement content data 1815 is defined. Then, the above generated ID is recorded in the instruction response statement ID of the node 2201 indicated by NID_X. After that, the newly set up NID_X is transmitted back to the document terminal 13.

Thereby, the document terminal 13 sets up a new node 2201 having the NID_X after performing the same operation as in the host computer 11, set ready for user operation.

Next, data operations for the paper formatting 28 will be explained below. First of all, a case where a new paper form is already allocated will be explained. Whether a paper sheet has been allocated or not can be learned by whether the paper sheet document ID 2211 has a negative value or not.

The document terminal 13 sends a chapter clause item node ID2201 (which is called NID_X) for which a paper format to be allocated, and the name of a paper format (which is called DNAME_X) selected to the host computer 11 requesting a set-up of the paper format.

Then, the host computer 11 generates a new document ID (which is called DID_X), and defines the files in each document management data 1818 and each document content data 1813 having DID_X for the name.

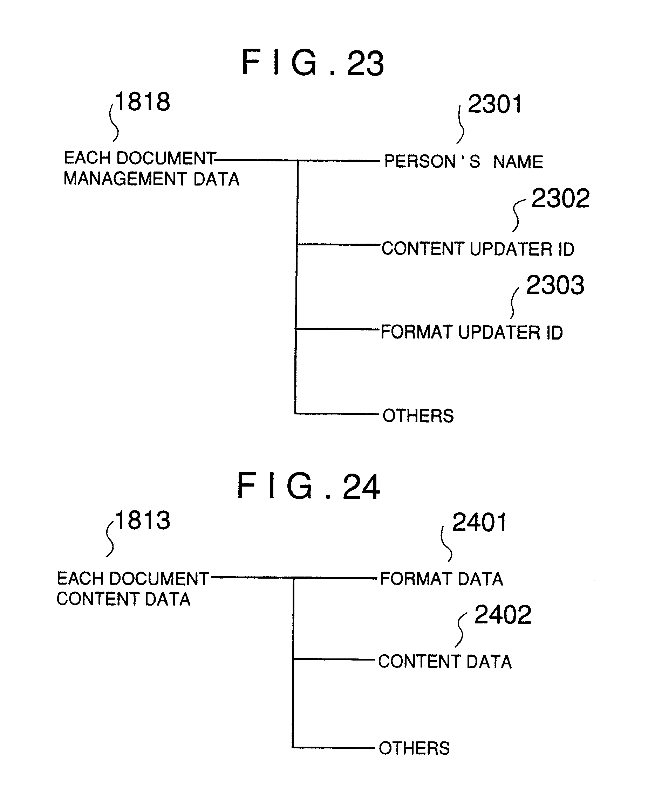

Each document content data 1813 records none. Each document management data 1818 comprises a document name 2301, a content updater ID 2302, a format updater ID 2303 and the like as shown in Fig. 23, wherein the document name 2301 records DNAME_X, the content updater ID 2302 and the format updater ID2303 record the partaker ID2207 of the node 2201 indicated by NID_X.

Further, DID_X is recorded in the paper format document ID2211 of the node 2201 indicated by NID_X, and "self" mark indicating a new set-up is recorded in the paper sheet self/other flag 2212. The last DID_X is then set to the document terminal 13.

Then, the document terminal 13 also records DID_X on the paper format document ID 2211 of the node 2201 indicated by NID_X and "self" indicating a new set up in the paper format self/other flag 2212.

Next, data operation for opening the paper sheet will be explained.

The document terminal 13 transmits the designated paper format document ID 2211 (which is called DID_X) to the host computer 11 requesting the supply of the document.

Then, the host computer reads out files from each document content data 1813 having DID_X for their names, and sends them back to the document terminal 13.

The document terminal 13, in turn, displays each document content data 1813 as shown in Fig. 8.

In addition, each document content data 1813 comprises at least a format data 2401 and a content data 2402 as shown in Fig. 24.

If the user designates to record a document after he has edited the format, for example, and if he sends the paper format document ID2211 (which is called DID_X), document content data and user ID (which is called UID_X) to the host computer, requesting to record the same, then the host computer checks if the content updater ID 2302 of each document management data 1818 indicated by DID.X is identical with the UID_X, and if identical, the content data 2402 of the file of each document content data indicated by DID_X will be updated, replaced with the content data sent from the document terminal 13.

Next, the document format updaters ID2303 indicated by UID_X and DID_X for each document management data 1818 are checked if they are identical with each other, if identical, document format data 2401 of each document content data 1818 file indicated by DID_X is replaced by document format data transmitted from the document terminal 13 for updating.

Finally, existence of updating in the format data 2401 and the content data 2402 is informed to the document terminal 13. Upon reception of this information, the document terminal 13 displays a message informing the user of the existence of updating in the format and contents.

In the next step, data operations for allocating an existing paper format by the call command 515 will be described.

The document terminal 13 sends a node ID 2216 (which is called NID_X) corresponding to a designated chapter clause item, a call object document ID (which is called DID_X), a data indicating either for reference or copy, and a user ID (which is called UID_X), to the host computer, requesting a call-up of paper sheet form.

Thereby, in the case of the paper sheet reference, the host computer 11 changes a paper sheet document ID indicated by NID_X to DID_X in the paper sheet document ID2211 at node 2201 and sets up "other" for the paper sheet self/other flag.

On the other hand, in the case of the paper format copy, a new document ID (which is called DID_Y) is generated, and files in each document management data 1818 and each document content data 1813 having DID_Y for their names are defined.

Then, the contents of files in the document management data 1818 and each document content data 1813 indicated by DID_X are copied in the file of DID_Y. After that, UID_X is recorded in th content updater ID 2302 and the format updater 2303 for each document management data 1818 of DID_Y. Further, the paper sheet format document ID of the paper sheet format document ID2211 of the node 2201 indicated by NID_X is set DID_Y, and the paper sheet format self/other flag is set "self".

Upon completion of the above operations, DID_X is sent to the document terminal 13 in the case of the paper sheet reference, and DID_Y in the case of the paper sheet copy.

Responding to the above, the document terminal 13 enters DID_X as a paper sheet document ID in the paper sheet document ID2211 of the node 2201 indicated by the NID_X, and sets the paper sheet self/other flag at "other" in the same manner as in the host computer, in the case of the sheet reference.

On the other hand, in the case of the sheet format copy, the paper sheet format document ID of the paper sheet format document ID2211 of the node 2201 indicated by NID_X is set DID_Y, and the paper sheet self/other flag is set "self".

Hereinabove described are the data operations regarding the paper sheet format set-up 28.

Data operations for the document/reference input 29 will be described in the following. The data operations, however, being almost the same as for the paper sheet set-up 28, explanation will be given only to such that are particular to this operations.

When an item for the chapter and clause is opened, a document is displayed. It is explained previously that when a paper sheet is allocated at this time, and when the document is opened for the first time, then a new document having the above paper sheet format will be supplied. This operation is unique to the document/reference input 29.

Then, the document terminal 13 transmits the designated paper sheet document ID (which is called DID_X), a node ID2201 (which is called NID_X) to which the document is to be allocated, and the chapter clause item name 2201 (which is called NAME_X), requesting a new document allocation.

Thereby, the host computer 11 generates a new document ID (whch is called DID_Y), and defines files of each document management data 1818 and each document content data 1813 having DID_Y for their names.

In the next step, the contents of files of each document management data 1817 and each document content data 1813 indicated by DID_X are copied in the file of DID_Y.

Further, a partaker ID of the node 2201 indicated by NID_X is recorded in the content updater ID2302 of each document management data 1818 of DID_Y, and NAME_X is recorded in the document name 2301. Incidentally, the content data 2402 of each document content data 1813 of DID_Y is initiallized. The document updater ID2303 is not changed.

Finally, DID_Y is recorded in the document ID2207 of the node 2201 indicated by NID_X, and "self" is recorded in the document self/other flag 2206, then DID_Y is sent to the document terminal 13.

Upon reception of the above transmission, the document terminal 13 also substitutes DID_Y for the document ID2207 of the node 2201 indicated by NID_X, and substitutes "self" for the document self/other flag 2206.

Next, in the following will be described data operations for the instruction/response 210.

Each instruction/response statement content data 1815, as shown in Fig. 25, is a set of individual instructions/responses 2501, comprising each item of addresser ID2502, addresser name 2509, transmission data and time 2503, instruction contents (or statement) 2504, response contents (statement) 2505, response data and time 2506, approved date and time 2507, and an individual instruction/response ID2508. A single individual instruction/response 2501 corresponds to a set of records of instructions/responses.

Data operations occur when ① opening an instruction/response statement, ② inputting instruction contents, ③ inputting a response content, and ④ approval by the addresser, which will be further detailed in the following.

① When the instruction/response statements are opened, the document terminal 13 transfers an instruction/response statement ID2208 (which is called IID_X) of node 2201 corresponding to the chapter clause item specified by the user to the host computer 11, requesting supply of the instruction/response statement therefrom.

The host computer 11 reads out each instruction/response statement content data file 1815 indicated by IID_X, and transmits it to the document terminal 13.

Upon reception of this transmitted data, and in case the same is in the pending mode, the document terminal 13 gathers individual instructions/responses 2501 having no record of approval date and time 2501 out of each instruction/response statement content data file 1815, and displays on the screen 1001 as shown in Fig. 10, ready for user operation.

On the other hand, in case the same is for the completed no. mode, those having record of approval data and time 2501 are grouped together, and displayed on the screen 1001 as shown in Fig. 10 set ready for user operation.

② When instruction statements are inputted, the document terminal 13 transfers instruction/response statement ID2208 (which is called IID_X) of corresponding node ID2201, text strings with the instructed contents, and the ID of the user who specified the same (which is called UID_X) to the host computer 11, requesting an instruction addition.

The host computer 11 generates a new individual instruction/response ID (which is called PID_X). This PID_X has an ID unique to each instruction/response statement content data 1815. Then, an individual instruction/response 2501 is added to a file indicated by IID_X. After that, there are recorded: UID_X in the addresser ID in the added individual instruction/ response 2501; the name of user corresponding to UID_X in the addresser name 2509; the present date and time in the transmission date and time 2503; text strings of the instructed contents transferred through the document terminal 13 into the instruction contents; and PID_X into the individual instruction/response ID.

After completion of the above operations, PID_X and the transmission date and time 2503 are set to the document terminal.

In the same manner as in the host computer, the document terminal 13 adds the individual instruction/ response 2501, then records UID_X in the added individual instruction/response 2501 as the addresser ID 2502; the user name in the addresser name 2509; date and time transmitted from the host computer in the transmission date and time 2503; text strings inputted by the user into the instruction contents; and PID_X into the individual instruction/response ID.

③ At the completion of the input of the response contents, the instruction/response statement ID2208 (which is called IID_X), the individual instruction/ response ID2508 (which is called PID_X) and the text strings of the response contents are sent to the host computer 11 to inform of the generation of the response.

The host computer 11 reads out each instruction/response statement 1815 indicated by IID_X to retrieve an individual instruction/response 2501 having PID_X as its individual instruction/response ID. With respect to the text strings which have been transferred through the document terminal 13 as their response content 2505, the present date and time is recorded as the response date and time 2506, then the file is closed. Then, finally, the contents of the response date and time are sent out.

In response to this, the document terminal 13 updates the response date and time 2506 of the individual instruction/response 2501 having PID_X by substituting the response date and time which the host computer sent.

④ When an approval by the addresser is given, an instruction/response statement ID2208 (which is called IID_X) and an individual instruction/response statement ID (which is called PID_X) are sent to the host computer 11 to inform the same of the occurrence of the approval.

In response to this, the host computer 11 reads out each instruction/response statement 1815 indicated by IID_X so as to retrieve an individual instruction/response 2501 having PID_X as its individual instruction/response ID. Then, after recording the present date and time as the approval date and time 2507, the file is closed. Finally, the contents of the approval date and time 2505 are sent out.

Responding to this, the document terminal 13 substitutes the approval date and time transmitted from the host computer for the approval date and time 2507 in the individual instruction/response 2501 having PID_X. Then, the individual instruction/response 2501 is deleted from the screen 1001, and is set in the wait state for user operation.

Hereinabove stated are the data operations with respect to the instruction/response 210 step.

Next, data operations for setting up a terminology dictionary to be used in the last finish 211 will be described.

With respect to each terminology dictionary content data 1816, there has been already described with reference to Fig. 16. On the other hand, each terminology dictionary management data 1820, as shown in Fig. 26, comprises phrase name 2601, content update ID 2602 and the like. Its structure is almost the same as that of each document management data 1818 shown in Fig. 23. Thereby, data operations regarding the set-up, call-up, storage and the like are almost the same so as to be readily inferable. For more details, refer to the descriptions on the data operations for paper sheet formatting.

In the following there will be described data operations for a work assignment 27. When allocating work assignments, a partaker's ID2207 before a change (which is called UID_X), and the name of a user who becomes the partaker as the result of the change (whose name is called UNAME_X tentatively) are sent to the host computer 11 requesting to set up the assignments.

Thereby, the host computer 11 searches each user management data 1906 existing under the user management data 1903 to examine if there exists any UNAME_X transmitted from the document terminal.

If there exists no UNAME_X, the data operations will be stopped, and the document terminal 13 will be notified so.

On the other hand, if there exists UNAME_X, its user ID (which is called UID_X) and UNAME_X are recorded respectively in the partaker ID2307 of the node 2301 indicated by NID_X and the partaker's name 2317, wherein partaker's ID before the change is set UID_Y, and the shared desk ID currently under operation is set CID_X.

Then, it is examined whether there exists CID_X in the shared desk 2003, to which each individual desk management data 1807 of UID_X belongs. If there exists, no operation is executed, while, on the other hand, if there does not exist, CID_X is added and recorded in its belonging shared desk 2003.

Further, after examining each shared desk content data 1814 expressed by CID_X, if there exists any node 2201 which has UID_X as its partaker, no operation will be performed. On the other hand, if there exists no more the node 2201 having UID_Y as its partaker, CID_X is deleted from the shared desk 2003 to which each individual desk management data 1807 indicated by UID_Y belongs, and is recorded thus therein.

If the node 2201 indicated by NID_X is an item root, a responsible person ID in each shared desk management data 1808 indicated by CID_X is changed to UID_X, and thus recorded.

Next, if a document ID2205 (which is called DID_X) of the node indicated by NID_X is not of a negative value (i.e., when the document is already assigned), and if the self/other flag 2206 is set "self", the content updater ID2302 for a file in each document management data 1818 indicated by DID_X is changed to UID_X. The format updater ID2303, however, is not changed here. Updater change will not be made also with the paper sheet format or terminology dictionary. They will be referred to later.

At the completion of the above operations, UID_X is sent to the document terminal.

Upon reception of this, the document terminal 13 substitutes UID_X for partaker ID2207 at the node 2201 indicated by NID_X, and substitutes NAME_X for the name 2217. Also if NID_X is an item root, the contents of the responsible person display region 52 will be changed.

If UID_X is a negative value, the user will be notified that there exists no eligible user.

In the following, other embodiments of the present invention will be explained with reference to each item.

Items described below are #1 improved work management, #2 editing by item unit in a document, #3 attribute change, #4 subdivision/integration of document items, #5 improved instruction/response features.

#1 Improved work management

It has been already described that the remaining or pending number of items are displayed in anticipation of the psychological effect on the partakers to expedite carrying out their assignments. In order to further enhance such work management functions, there may be designed to have update status display region 56, work progress display region 59 and completion schedule display region 510 on the shared desk screen 51.

As such that may be displayed on the update status display region 59, there may be, for example, the time when this shared desk screen 51 is opened, or the last udpate date of the document before the regeneration 516 is executed, or the period of time during which the document is opened by the partaker since the last update (which will be called lag time). It can be learned from the last updating date how a certain partaker is performing and handling his assignment. Also from the lag time, the user can presume the degree of credibility for the document he is referring to.

The last update date can be transmitted to the document terminal 13 by adding the same to each document management data 1818 as one of its items as shown in Fig. 23, to be recorded at the time of document updating therein. On the other hand, the lag time can be obtained by arranging the user ID to be transmitted from the document terminal 13 together with the request for the supply of paper sheet to the host computer 11. Time lag thus obtained may be provided to the document terminal 13 together with shared desk content data.

The work progress display region 59 may display the present status of progress, for example, in percentage, until its completion. One who is allowed to register such updating is a partaker oneself. For example, in order to effect the above updating facility, the work progress display region 59 and the correction command 513 may be selected so as to enter numerical values, or values may be specified on the scale by means of a mouse. This information also will bring about psychological effect on the partakers.

This work progress status may be recorded, for example, as progress 2210 for each node 2201 in each instruction/response statement content data 1815.

The completion schedule display region 512 displays the date, when the partaker opens the document for the first time, and the date of completion scheduled obtainable from the calculation of the work progress. Based on this information, the responsible person is capable of planning various schedules. The starting date may be recorded, for example, when a certain node 2201 is first allocated with a document, or when the document is opened for the first time.

#2 Document editing by item unit

Simply adding a document item by item in sequence affords no flexibility. Thereby, operations for interrupting insertion 518, deletion 519, copy 520 and move 521 will be necessary to be provided.

When an item name is selected and the insertion 518 is designated, all items under the designated item will be moved or scrolled by a line downward providing a space for a new item name to be entered. Its operation, however, will be restricted to conform to the item input rule (rule 1) as previously described.

When an item name is selected and the delete 519 is designated, all items under the designated item will be deleted. Namely, designated node 2201 and its descendant node 2201 will be deleted. The deletion, however, will not be executed unless the following conditions are satisfied.

1. The user ID for the designated item is identical with the partaker ID for its parent item. The partaker is not allowed to change the contents of items in higher levels. The item input rule (rule 1) described above must be conformed to.

2. The user ID, the partaker ID for the designated item, and all partakers' IDs for the lower level items are the same. This is for always providing occasions for the partakers in the lower levels to discuss with the pertinent partakers.

3. All instructions/response statements corresponding to the designated item and its lower level items have been approved. This is for providing occasions for every persons concerned to discuss with other relevant persons.

When after selecting an item name and designating the copy command 512, an insertion position (including the left and right positions) is designated, all the designated items and corresponding documents including those existing in the lower levels are copied in the designated insertion position. All data succeeded to are only the hierarchical relations between items, item names of chapters and clauses and the contents of the document. Node ID2216, parent/ brotherhood node 2215, and document ID2205 are all renewed, and the self/other flag 2206 is set "self". Also, its partaker ID and its name are replaced by those of the user who executed copy command. This operation also must conform to the item input rule (rule 1).

After selecting an item name and designating the move command 521, when an insertion position (including the left and right positions) is designated, all the designated items and corresponding documents including those in the lower levels are moved to the designated position. Data to be changed here are parent/brotherhood nodes 2215 corresponding to the designated item, and newly allocated parent/brotherhood nodes 2215 relative to the designated item as the result of the movement. This operation also must conform to the item input rule (rule 1).

#3 Attribute change

As described previously, when a partaker is changed, an updater ID2302 of the document contents allocated thereto will be changed in the same manner, allowing a new partaker to update the contents. In this case, however, the format updater ID 2303 for the document, and the paper form and terminology dictionary updater ID are not changed. Thereby, strict observance of the document format defined by the responsible supervisor (or partakers in the higher levels) will be ensured during edit operations by partakers in the lower levels.

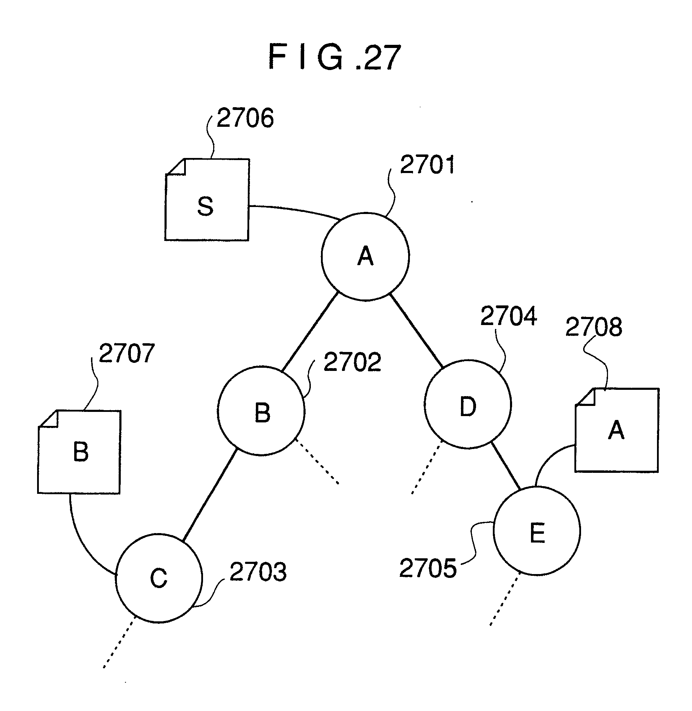

However, it will be too rigid to completely restrict updating only to the partaker in the higher levels. Thereby, once an item name, paper format name and a terminology dictionary have been selected and the attribute command 522 has been described, the updater of the document or dictionary allocated thereto is enabled to be changed directly. At a change, however, the operation must comply with the rule shown in Fig. 27, extended from the rule for changing the assignments (rules 2, 3 and 4) as described previously.

With reference to Fig. 27, assuming that there exists a hierarchical structure of chapter clause items comprising an item root 2701 in the topmost level, items from 2702 to 2705 and the like, that there are allocated a paper format 2706 to the item root 2701, a paper format 2707 to the item 2703, and a paper format 2708 to the item 2705, respectively, and that partakers and updaters of each item and paper format are as expressed in English characters.

Here, the rules for changing updaters by means of the attribute 522 are defined as follows. Here also, a person who updates a format, paper sheet format, or terminology dictionary to be used in documents allocated to a certain item is called an updater in short.

"When the user is identical with the updater of a certain item, the updater is capable of being changed to a partaker of a corresponding item or its direct ancestor item".

"The partaker of an item root is, at least, capable of changing the updater of the item root to himself or herself".

For example, partaker B is allowed to change the updater of paper sheet 2707 to partaker A. The user A is also allowed to change the updater of paper sheet 2706 to A. By the way, that the updater of paper sheet 2706 and the partaker of the item root 2701 are different implies that there has been a change in the responsible person previously.

In addition, when the self/other flag 2206, 2212 or 2214 of a document, paper sheet or terminology dictionary allocated to a certain item is not set "self", change of the updater is not allowed to be performed. This is for preventing other documents in the shared desk to be changed at one's discretion.

#4 Division/integration of document items

Items cannot always be defined in such desirable conditions where all the document structures have been clearly understood and the contents have been closed. It occurs sometimes that a final item structure becomes clearer with an increasing degree of specifications in each substantial portion. Thereby, the document item division 523 and integration 524 functions are provided for such purposes.

When a certain item name is selected and division 523 is designated, the document allocated thereto is divided according to its logical structure, generating substrate for new items to be accommodated under the selected item.

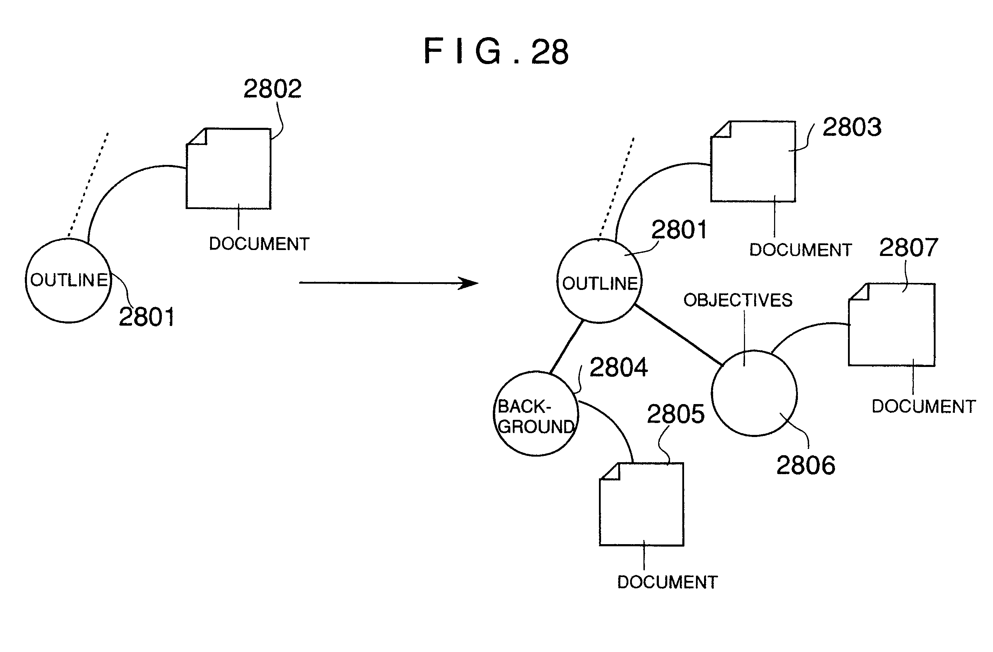

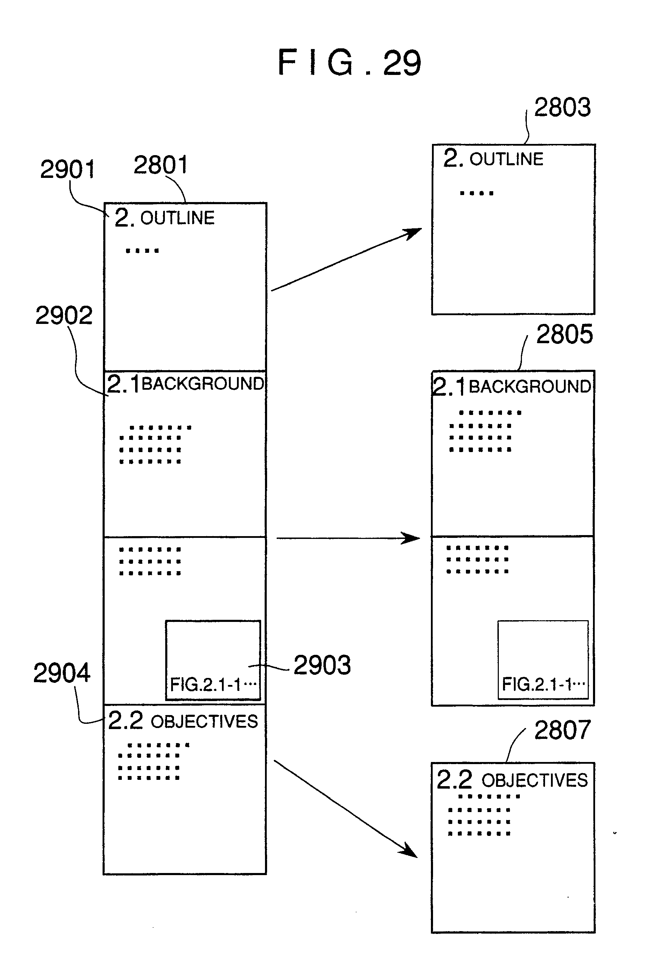

For example, in Fig. 28, let us presume that item 2801 is allocated with a document 2802, and that the contents of the document 2802 comprise, as shown in Fig. 29, chapter 2901, and clauses 2902 and 2904, in addition, the clause 2902 contains drawing 2903.

Here, if we perform the above logical structure analysis on the document 2801, its chapter clause structure will be clarified. Thereby, a new node 2201 can be set up completely based on the above clarified chapter clause structure. Here, titles for the chapter and clause extracted from the document are used for the chapter clause item name 2201. Namely, item 2804 and item 2807 are generated under item 2801.

Through the logical structure extraction, not only the chapter and clause structure, but also the positions of the contents pertaining to each chapter and clause (including drawing and tables) can be clarified. Thereby, as shown in Fig. 29, the document 2801 is divided according to its chapter and clause structure into document 2803, document 2805 and document 2807, each further being allocated to items as shown in Fig. 28. Further, partaker ID2207 and its name 2217 for each item are the same as for the original item.

In addition, if there exists any contradiction in the logical structure, the operation will be interrupted. A person who is allowed to run the division function is only the partaker of the item.

When a certain item is selected and the integration command 524 is designated, contrary to the case of division command, all documents allocated to the item and its related items in the lower levels will be integrated into a single document. All other items in the lower level than the designated item are deleted, allocating the integrated document to the designated item. However, because this operation accompanies deletion of items in the lower levels, it must also conform to the rules as previously described.

#5 Enhancement in the instruction/response function

According to the embodiments of the present invention described above, when one wishes to give the same instruction to a plurality of items, one must repeat writing the same instruction as many times as the number of items. Thereby, it is necessary to provide a function for issuing the same instruction to a plurality of items.

Because no arrangement has been made for a particular person to partake in a single item, it will take time to examine the records of the instruction/ response via the name of a specified person. It will also take time to examine the records of the instruction/ response that have been exchanged in a shared desk on a specified date and time. Therefore, provision for, what is called, a retrieval function for the instruction/response records is required wherein all records of the instructions given to or issued by a certain user, and of the responses from or to the user, are made accessible corresponding to each user.

Further, when one wishes to give an instruction to a specified position in a document but describes only the contents of the instruction, to locate whereabout will be cumbersome. Therefore, it will be necessary to install a function like a post-it feature whereby an instruction/response is enabled to be given directly corresponding to the specified position on the page, drawings, tables, paragraphs and the like.

Still further, accoridng to the above embodiments no particular considerations have been given to such occasions when an immediate response is required for an instruction. Thereby, provision for an emergency communication feature will be required whereby, for example, an emergency instruction, when it is given, will be informed immediately to a designated partaker, and all other operations will be interrupted until the response is returned.

As has been described above, coperative document preparation can be efficiently carried out by work sharing.

The following systems may be provided in the form of embodiments of the present invention.

(1) A system for managing cooperative preparation of a document by a plurality of partakers, comprising:

means for inputting a document specification for specifying an item constituting a document and a partaker who inputs a content corresponding to the item;

means for inputting a document content corresponding to the specified item; and

means for giving priority, on the basis of the document specification, to inputting of the item and the contents by the specified partaker.

(2) A system as described in Item (1), further comprising:

paper form designation means for designating a paper form to define at least one of (a) a rule of layout, on a page, of the contents corresponding to items in the document specification and (b) a pattern for decorating the page;

means for supplying the paper form designated by the paper form designation means at a start of input of the document contents; and

means for giving priority to an instruction to change said paper form by the specified partaker.

(3) A system for managing cooperative preparation of a document comprising:

means for storing a content of an instruction for a document in a memory region for retaining document information; and

means for storing a response corresponding to a content of the instruction.

(4) A system as described in Item (3), further comprising:

means for inputting partaker identification information for identifying each partaker involved in cooperative preparation of a document;

means for assigning the document to each partaker; and

means for laying open a content of an instruction for the document or a response thereto, to the partakers to whom the document is assigned.

(5) A system for managing cooperative preparation of a document by a plurality of partakers, comprising:

means for inputting a document specification for specifying an item constituting a document and a partaker who inputs a content corresponding to the item;

means for displaying a name of a partaker corresponding to the specified document item; and

means for displaying a work progress status corresponding to each item.

## Claims

1.  A system for managing cooperative preparation of a document by a plurality of partakers, comprising:

    means for specifying an item constituting a document and a partaker (55) who inputs a content corresponding to said item;

    means for inputting a document content (81) corresponding to said specified item; and

    means for giving priority to inputting of the item and the contents by said specified partaker.

2.  A system for managing cooperative preparation of a document comprising:

    means for inputting a content of an instruction for a document or a specified location of the document;

    means for inputting a response to said inputted instruction; and

    means for storing the content of said instruction and a response thereto in said document or in a specified location in the document.

3.  A system for managing cooperative preparation of a document comprising:

    means for designating a sequential order among a plurality of documents;

    means for designating a format for numbering pages, chapters, clauses, drawings and tables;

    means for extracting a logical structure of said document; and

means for correcting disagreement in numbering of pages, chapters and clauses, drawings and tables or their formats, on the basis of the format designated in advance by said each means, said sequential order between said document and a logical structure in said each document.

4.  A system for managing cooperative preparation of a document comprising:

    means for inputting a set of documents;

    means for designating, for a set of documents, at least one of (a) a phrasing format and thesaurus, (b) a representative word in a set of synonyms, and (c) a paper form which defines a rule of layout for the contents of the document on the page and a pattern decorating the page;

    means for converting a phrasing format in each document for said set of documents to said designated format;

    means for converting terms used in each document to a representative word as specified above; and

    means for correcting a rule of layout on a page for a content of each document and correcting a pattern for decorating the page to adapt them to those of said specified paper form.

# F I G . 1

# FIG.2

# FIG.3

31

PERSONAL DESK (DESK TOP ) : NOBORU TAKESHITA

SPECIFICATION

REPORT

OBTAINED
MATERIALS

LIBRARY

36

SHARED DESK : MANUALS

36

SHARED DESK : SPECIFICATIONS

35

SUPPLY SHELF

................  | OPEN | REDISPLAY | | ................

37

# FIG.4

**31**

PERSONAL DESK:
NOBORU TAKESHITA

**35**

OPEN COMMAND

**41**

SUPPLY SHELF

SUPPLY
SHELF

**42**

NEW
DOCUMENT

NEW SHARED
DESK

**44**

NAME ENTRY SHEET

MANUAL

NEW BINDER

COPY

**43**

# F I G . 5

SHARED DESK : MANUAL

| RESPONSIBLE SUPERVISIOR |  |  |  | LAST FINISH |  | PRINTING |  | PRECEDING PAGE | FRONTMOST | DELETE | COPY |
|---|---|---|---|---|---|---|---|---|---|---|---|
| KAWAKAMI |  |  |  |  |  |  |  | PRECEDING PAGE | ENDMOST | MOVE | ATTRIBUTE |

| CHAPTER & CLAUSE | PART-AKER | UPDATE STATUS | PEND-ING | COM-PLETED | 0%            100% PROGRESS | COMPLETION SCHEDULED | PAPER FORM | TERMINOGY DICTIONARY | | |
|---|---|---|---|---|---|---|---|---|---|---|
| MANUAL | KAWA-KAMI | H1.5.30. 11:00 | 6 | 15 | ⊠⊠⊠⊠⇒ | H1.7.15 | A4 PARA-GRAPH | 2050G TER-MINOLOGY | | CORRECT |
| OUTLINE | TANI-FUJI | H1.5.30 11:00 | 2 | 11 | ⊠⊠⇒ | H1.7.20 | ......... | ......... | | INSERT. |
| EQUIPMENT SET-UP | FUKU-NAGA | H1.6.1. 15:00 | 0 | 0 | ⊠⇒ | H1.8.12 | A4 NOR-MAL 1 | ......... | | OPEN |
| CONNECTIONS | KUDO | H1.5.30. 11:00 | 0 | 2 | ⊠⊠⇒ | H1.8.2 | ......... | EQUIPMENT TERMINO-LOGY | | DIVIDE. |
| POWER SOURCES | CHIBA | H1.6.1 15:00 | 5 | 15 | ⊠⊠⊠⇒ | H1.7.15 | A4 PRO-CEDURES MANUAL | ......... | | INTEGRATE |
|  |  | UNDER EDITING |  |  |  |  |  |  | | CALL |
|  |  |  |  |  |  |  |  |  | | RE-DISPRAY |
|  |  |  |  |  |  |  |  |  | | CLOSE |

EP 0 444 669 A2

# F I G .6

# F I G . 7

# F I G . 8

DOCUMENT : A PARAGRAPH    81

82   83

CLOSE

FORMAT    CON-
TENTS

84

# F I G . 9

91

CALL ATTRIBUTE SHEET : A4
NORMAL 1

REFERE-
NCE    COPY

CLOSE

93   92

# FIG. 10

1001

INSTRUCTION.RESPONSE SHEET(PENDING) : CONNECTION METHOD

| ADDRESSER | DATE | INSTRUCTION STATEMENT | RESPONSE STATEMENT | DATE | DATE OF APPROVAL |
|---|---|---|---|---|---|
| CHIBA | H1.5.21 | I HAVE QUESTIONS ON.... IN CHAPTER 3 IN THE OUTLINE MR. KUDO HAS PREPARED. WOULD LIKE TO HAVE YOUR COMMENT. | THERE GOES THAT CARES ARE OFTEN THE CAUSE OF ILLNESS AND DOUBT. BUT I CORRECT- ED THE PART YOU MENTIONED TO..... | H1.5.21 | |
| FUKUNAGA | H1.5.21 | THE CLAUSE CONSTRUC- TION OF CHAPTER 3 SHOULD BE CHANGED TO... | | | |

PRECEDING PAGE    FRONT-MOST

PRECEDING PAGE    END-MOST

ADDITION  1008

APPROVAL  1010

REDISPLAY  1009

CLOSE

1002  1003  1004  1005  1006  1007

EP 0 444 669 A2

# FIG. 11

TITLE FORMAT, PHRASING FORMAT SPECIFYING SHEET

CLOSE

| CHAPTER CLAUSE TITLE FORMAT | DEPTH OF CHAPTERS/CLAUSES | | | | | | |
|---|---|---|---|---|---|---|---|
| DRAWING, TABLE TITLE FORMAT | CHAPTER | CLAUSE | ITEM | LOWER | LOWER | LOWER | LOWER |

SIZE 字 字 字 字

TYPE OF LETTER GOTHIC MING TYPE SLANTED VOID

EMPHASIS UNDERLINE HALF TONE DOT MESHING NONE

LAYOUT LEFT JUSTIFICATION CENTER JUSTIFICATION

SPACE ○ 1/4CHAR. 1/2CHAR. 1CHAR.

SIGN TYPE NONE PUNCTUATION CLOSED BRACKETS OPEN BRACKET

SYMBOL TYPE NUMERIC ENGLISH KANJI KANA

| PREFIX MARK | ORIGINATOR | | REFER TO : | THE |
|---|---|---|---|---|

| SUFFIX MARK | ORIGINATOR | | REFER TO : | CLAUSE |
|---|---|---|---|---|

PUNCTUATION MARK [ — ]

BRACKET MARK [ ] [ ]

PHRASING  NORMAL （だ。である。） RESPECTFUL （です。ます。）
DA DEARU DESU MASU

# F I G. 1 2

TITLE FORMAT, PHRASING FORMAT SPECIFYING SHEET ⌐1101

CLOSE ⌐1102

⌐1106

| CHAPTER CLAUSE<br>TITLE FORMAT | DEPTH OF CHAPTERS,<br>CLAUSES | | | | | |
|---|---|---|---|---|---|---|
| DRAWING, TABLE<br>TITLE FORMAT | CHAPTER | CLAUSE | ITEM | LOWER | LOWER | LOWER |

SIZE          ≠   字   字   字

TYPE OF LETTER GOTHIC  MING TYPE   SLANTED VOID

EMPHASIS    UNDERLINE   HALF TONE    NONE
                        DOT MESHING

LAYOUT    LEFT
          JUSTIFICATION  CENTER JUSTIFICATION

SPACING       ○      1/4CHAR. 1/2CHAR. 1CHAR.

1202

201

SIGN TYPE   SERIAL
            NUMBERING   SIGN MARKED

1203

SYMBOL TYPE  NUMERIC  ENGLISH  KANJI   KANA

| PREFIX MARK | ORIGINATOR | | REFER<br>TO: | THE |
|---|---|---|---|---|
| SUFFIX MARK | ORIGINATOR | | REFER<br>TO: | FIG. |

204

BRACKET MARK  —

⌐1103

PHRASING NORMAL ( だ。である。)  RESPECTFUL ( です。ます。)
               DA DEARU          DESU MASU

# F I G . 13

1301 — LOGICAL STRUCTURE EXTRACTION

1302 — NUMBERING CORRECTION TITLE FORMAT CORRECTION

1303 — PHRASING FORMAT CORRECTION

1304 — TERMINOLOGY CORRECTION

1305 — CONTENTS LAYOUT CORRECTION

# FIG.14

1402       1401

1403

1404

1405

1408

1. OUTLIN

   HERE, WE...

1.1 BACKGROUND

   RECENTLY, THERE...

1.1.1 SOCIAL BACKGROUND

   ...

1.2 OBJECTIVES

   THIS COMPUTER AIMS AT...

FIG.1.2-1 ILLUSTRATES

FIG.1.2-1   1406   Y Y Y

FIG.1.2-2   X X X

1407

# FIG.15

1501      1502      1503      1504

ITEM ROOT      1402      1403      1404

1505

1405

1507

1406      1407

1506

1508

1408

# FIG.16

{ 計算機、      コンピュータ }
  KEISANKI      KONPYŪTA

{日立2050G   エンジニアリング   ワークステイション,EMS2050G}
  HITACHI2050G    ENJINIARINGU    WĀKUSUTEISHON,    EMS2050G

{ -------------------------------- }
{ -------------------------------- }

# FIG.17

1704

1701

1702

1705

1706

1703

日立2050エンジニアリングワークステイション

HITACHI 2050 ENJINIARINGU WĀKUSUTEISHON

計算機

KEISANKI

EP 0 444 669 A2

# F I G . 18

```
          1801            1803                    1806
    PROFILE         ┌──── USER ───────────── INDIVIDUAL USERS
    MANAGEMENT  ────┤                       :
    DATA            │     1804                    1807
                    │                       INDIVIDUAL PERSONAL
                    ├──── PERSONAL ───────── DESKS
                    │     DESK              :
                    │     1805                    1808
                    │                       INDIVIDUAL SHARED
                    ├──── SHARED ─────────── DESKS
                    │     DESK              :
                    │     1817                    1818
                    │                       INDIVIDUAL
                    ├──── DOCUMENT ───────── DOCUMENTS
                    │                       :
                    │     1819                    1820
                    │                       INDIVIDUAL
                    └──── TERMINOLOGY─────── TERMINOLOGY
                          DICTIONARY        DICTIONARIES
        1802                             :                    1813
    CONTENTS ───┬──── DOCUMENT ────────── INDIVIDUAL DOCUMENTS
    DATA        │     1809               :
                │                             1814
                │                        INDIVIDUAL SHARED
                ├──── SHARED DESK──────── DESKS
                │     1810               :
                │                             1815
                │                        INDIVIDUAL
                ├──── INSTRUCTION/─────── INSTRUCTIONS /
                │     RESPONSE           : RESPONSES
                │     1811                    1816
                └──── TERMINOLOGY──────── INDIVIDUAL TERMINOLOGY
                      DICTIONARY        : DICTIONARIES
                      1812
```

# F I G . 19

```
        1806                    1901
    EACH USER ──────┬──── PERSON'S
    MANAGEMENT      │     NAMES
    DATA            │              1902
                    └──── USER ID
```

# F I G . 20

1807

2001

2004

EACH PERSONAL DESK MANAGEMENT DATA —— DOCUMENT ————— INDIVIDUAL DOCUMENT ID

2002

2005

2006

—— BINDER ————— INDIVIDUAL BINDERS ————— PERSON'S NAME

2003

2008

—— DOCUMENT

—— BELONGING SHARED DESK ————— INDIVIDUAL SHARED DESK ID

—— OTHERS

2007

—— OTHERS

# F I G . 21

1808

2101

EACH SHARED DESK MANAGEMENT DATA —— PERSON'S NAME

2102

—— RESPONSIBLE SUPERVISOR'S ID

—— OTHERS

# FIG. 22

```
        2201                    2206
2204 ┌──────────────────────────┐
     │ CHAPTER CLAUSE ITEM NAME │
2205 │ DOCUMENT ID, SELF/OTHER FLAG │   2217
2207 │ PARTRKER ID, NAME        │
     ├──────────────────────────┤
2208 │ INSTRUCTION, RESPONSESTATE- │
     │ MENT ID                  │
2209 │ DATE OF START            │
2210 │ PROGRESS START           │
     ├──────────────────────────┤   2212
2211 │ PAPER DOCUMENT ID, SELF/OTHER │
     │ FLAG                     │
2213 │ TERMINOLOGY DICTIONARY ID, │
     │ SELF/OTHER FLAG          │   2214
     ├──────────────────────────┤
2215 │ PARENT/BROTHERHOOD NODE  │
     ├──────────────────────────┤
2216 │ NODE ID                  │
     └──────────────────────────┘
```

1814

2202 TITLE FORMAT

2203 PHRSING

# F I G . 23

1818

2301

EACH DOCUMENT
MANAGEMENT DATA —————————— PERSON'S NAME

2302

————— CONTENT UPDATER ID

2303

————— FORMAT UPDATER ID

————— OTHERS

# F I G . 24

1813

2401

EACH DOCUMENT
CONTENT DATA —————————— FORMAT DATA

2402

————— CONTENT DATA

————— OTHERS

# FIG. 25

1815    2501    2509

2502 — ADDRESSER ID , NAME

2503 — DATE OF TRANSMISSION

2504 — INSTRUCTION STATEMENT

2505 — RESPONSE STATEMENT

2506 — DATE OF RESPONSE

2507 — DATE OF APPROVAL

2508 — INDIVIDUAL INSTRUCTION , RESPONSE ID

# FIG. 26

1816    2601

EACH TERMINOLOGY DICTIONARY MANAGEMENT DATA ——— PERSON NAME

2602

——— CONTENT UPDATER ID

——— OTHERS

# F I G .27

# FIG. 28

2802

DOCUMENT

OUTLINE

2801

→

2803

DOCUMENT

2801

OUTLINE

OBJECTIVES

2807

DOCUMENT

BACK-GROUND

2804

2805

2806

DOCUMENT

EP 0 444 669 A2

# FIG.29

2803

2. OUTLINE

. . . .

2901    2801

2. OUTLINE

. . . .

2902

2.1 BACKGROUND

:::::::
:::::::
::::::

2805

2.1 BACKGROUND

:::::::
:::::::
::::::

:::::::
:::::::
::::::

2904

FIG.2.1-1···

2903

:::::::
:::::::
::::::

FIG.2.1-1···

2.2 OBJECTIVES

:::::::
:::::::
::::::

2807

2.2 OBJECTIVES

:::::::
:::::::
::::::